# EUROPÄISCHE PATENTSCHRIFT

(11) **EP 2 230 168 B1**
(45) Veröffentlichungstag und Bekanntmachung des Hinweises auf die Patenterteilung: **10.08.2016**
(21) Anmeldenummer: 10156584.4
(22) Anmeldetag: 16.03.2010
(51) Int. Cl.: B62M 9/16, B62K 19/30, B62K 25/28

(54) **Vorrichtung zur Führung einer Kette**
Device for guiding a chain
Dispositif destiné au guidage d'une chaîne

(30) Priorität: 16.03.2009 DE 102009013339
(43) Veröffentlichungstag der Anmeldung: 22.09.2010
(73) Patentinhaber: Klieber, Jochen, 83342 Tacherting (DE)
(72) Erfinder: Klieber, Jochen, 83342 Tacherting (DE)
(74) Vertreter: Maiwald Patentanwalts GmbH

(56) Entgegenhaltungen:
- EP-A2- 1 595 784
- GB-A- 420 128
- GB-A- 2 243 661
- JP-A- 4 169 389
- US-A- 5 013 285
- US-A1- 2004 009 835

## Beschreibung

### GEBIET DER ERFINDUNG:

Die Erfindung betrifft die Kettenführung an Fahrrädern. Insbesondere betrifft die Erfindung eine Kettenführung, ein Kettenführungssystem und eine Kettenstrebe an einem Fahrradhinterbau, sowie ein Fahrrad.

### TECHNOLOGISCHER HINTERGRUND:

Die Antriebskette eines Fahrrades kann im Geländeeinsatz beispielsweise an einem Mountainbike erheblichen Erschütterungen ausgesetzt sein. Dies kann ein Abspringen der Fahrradekette vom Kettenblatt bzw. von dem Ritzel verursachen. Jedoch ist diese unter Umständen plötzliche Positionsänderung der Kette gefährlich und daher unerwünscht. Bekannte Technologien der Kettenführung verwenden Bauteile, die fest fixiert am Tretlager des Fahrradrahmens werden.

Dabei ist eine Kettenführung ebenso der technischen Problematik ausgesetzt, dass die Kette in unterschiedlichen Gängen verschieden stark gespannt ist. Eine Kettenführung kann somit auch teilweise zum spannen der Kette eingesetzt werden. Weiterhin stellt ein beweglicher Hinterbau von vollgefederten Fahrradrähmen eine zusätzliche Herausforderung an die Führung der Kette dar, da die Kette im Betrieb beim Einfedern des Hinterbaus ebenso eine Bewegung ausführt.

US 5,013,285 beschreibt eine Kettenführung, bei der die Kette zwischen dem vorderen Kettenblatt und dem hinteren Umwerfer von einem Ritzel geführt wird, wobei das Ritzel über eine Halterung an der Kettenstrebe befestigt ist. Damit die Kette den Bewegungen des hinteren Schaltwerks folgen kann, ist die Halterung des Ritzels lateral beweglich ausgeführt, das heißt verschwenkbar. Dokument US 2004/0009835 beschreibt eine Kettenführung zur Führung einer Fahrradkette und zur Anbringung an einer Kettenstrebe an einem Tretlagergehaüse,die Kettenführung aufweisend eine Kettenführungsvorrichtung, die derart ausgebildet ist, dass eine Kette bei Bewegungen der Kette, die durch eine Kettenschaltung hervorgerufen wird, durch die Kettenführungsvorrichtung geführt wird, wobei die Kettenführungsvorrichtung ein Rollenelement aufweist; wobei das Rollenelement zumindest einen ersten Bereich mit einem variablen ersten Durchmesser und einen zweiten Bereich mit einem zweiten Durchmesser aufweist; wobei der erste und der zweite Durchmesser unterschiedlich sind; wobei der erste Bereich zur Führung der Kette in einer ersten Position der Kette auf Kettenblättern des Fahrrads ausgeführt ist; wobei der zweite Bereich zur Führung der Kette in einer zweiten Position der Kette auf den Kettenblättern des Fahrrads ausgeführt ist; und wobei ein Wechsel der Kette von der ersten in die zweite Position durch eine Kettenschaltung verursacht wird.

### ZUSAMMENFASSUNG DER ERFINDUNG:

Es ist eine Aufgabe der Erfindung, eine verbesserte Führung einer Kette an einem Fahrrad anzugeben.

Es sind eine Kettenstrebe an einem Fahrradhinterbau, eine Kettenführung, ein Kettenführungssystem mit einer Kettenstrebe und einer Kettenführung und ein Fahrrad mit einem Hinterbau mit einer Kettenstrebe gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Kettenstrebe, die Kettenführung, das Kettenführungssystem und das Fahrrad.

Definitionen und begriffliche Erläuterungen:
Es sei darauf hingewiesen, dass im Kontext der Erfindung der Begriff "Kettenführung" jede Vorrichtung umfasst, die in der Lage ist, sowohl bei einer Vorwärtsbewegung der Kette als auch bei einer Rückwärtsbewegung der Kette
die Kette derart entlang einer lateralen Richtung in Position zu halten, dass keine unerwünschten Schaltvorgänge bzw. Positionswechsel der Kette erfolgen.

Weiterhin ist im Kontext der vorliegenden Erfindung, falls nicht anders definiert, eine "laterale Richtung" senkrecht zur Richtung der Antriebsbewegung der Kette definiert. In den Figuren wird dies mit y-Richtung bezeichnet.

Der Begriff "Rollenelement" umfasst im Kontext der Erfindung beispielsweise eine oder mehrere Schaltrollen oder eine andere mechanische Einheit, welche die Führung der Kette gewährleistet.

Der Begriff "Aufnahmevorrichtung" wird im Kontext der Erfindung als Bereich der Kettenstrebe definiert, der zur Befestigung einer Kettenführung an der Kettenstrebe ausgeführt ist. Beispielsweise kann die Aufnahmevorrichtung besonders geformt sein und Führungselement und / oder eine Bohrung aufweisen mittels welcher die Befestigung erfolgen kann. Falls gewünscht kann die Aufnahmevorrichtung auch lediglich als eine Bohrung und / oder als ein Gewinde ausgeführt sein.

Gemäß einem Ausführungsbeispiel der Erfindung ist eine Kettenstrebe an einem Fahrradhinterbau angegeben, wobei die Kettenstrebe zumindest eine Aufnahmevorrichtung aufweist. Dabei erstreckt sich die Kettenstrebe zwischen einem Tretlagergehäuse des Fahrrades und einem Bereich eines hinteren Ausfallendes des Fahrrades. Weiterhin ist die Aufnahmevorrichtung Teil der Kettenstrebe und die Aufnahmevorrichtung ist zur Befestigung einer Kettenführung an der Kettenstrebe ausgeführt.

Dabei sei explizit darauf hingewiesen, dass der Bereich der Kettenstrebe, in welchem sich die Aufnahmevorrichtung befindet nicht das hintere Ausfallende umfasst. Mit anderen Worten handelt es sich bei dieser Aufnahmevorrichtung, die deutlich beabstandet vom hinteren Ausfallende platziert ist.

Dabei kann die Aufnahmevorrichtung derart ausgeführt sein, dass nach einer Anbringung der Kettenführung an der Kettenstrebe ein Mindestabstand zwischen dem die Kette führenden Element der Kettenführung, wie beispielsweise einer Kettenführungsvorrichtung, z.B. ein Rollenelement oder Gleitelement, und der Kettenstrebe einen Minimalabstand aufweist. Dieser Minimalabstand kann beispielsweise die Höhe der Kette bzw. eines Kettengliedes betragen, die in beispielhaften Fällen 4 mm beträgt. Aber auch andere Abstände und Höhen sind möglich.

Beispielsweise kann das Gleitelement derart sattelförmig ausgebildet sein, dass die Kette auf dem Sattel aufliegt, oder den Sattel berührt, und bei einer Tretbewegung auf dem Sattel entlang gleitet, wobei das Gleitelement derart ausgebildet ist, dass die Kette bei lateralen Bewegungen der Kette, die durch eine Kettenschaltung hervorgerufen wird, durch das Gleitelement innerhalb eines gewünschten Positionsbereichs gehalten oder geführt wird.

Das Gleitelement kann eine durchgehende Fläche aufweisen, die im montierten Zustand bei aufrecht stehendem Fahrrad, in lateraler Richtung, also in Y-Richtung bzw. senkrecht zur Zugrichtung der Kette, horizontal verläuft.

Gemäß einer weiteren Ausführungsform weist das Gleitelement eine Fläche auf, die im montierten Zustand bei aufrecht stehendem Fahrrad in lateraler Richtung, also in Y-Richtung bzw. senkrecht zur Zugrichtung der Kette, geneigt verläuft.

Gemäß einer weiteren Ausführungsform weist das Gleitelement eine Fläche auf, die mit Absätzen bzw. Stufen ausgebildet ist, wobei die Stufen horizontal und/oder geneigt ausgebildet sein können. Beispielsweise können drei Stufen vorgesehen sein. Z.B. sind die drei Stufen horizontal ausgebildet. In einem anderen Beispiel sind die Stufen alle geneigt ausgebildet, wobei die Neigung gleich oder auch unterschiedlich stark ausgebildet sein kann. In einem anderen Beispiel ist die mittlere Stufe horizontal und die beiden äußeren Stufen sind gleich oder unterschiedlich geneigt ausgebildet. Eine Stufung kann dabei gleich oder unterschiedlich ausgebildet sein. Auch Zwischenstufen sind möglich, um einen Wechsel der Kette von einem Teilbereich zum nächsten zu unterstützen.

Die Gleitfläche ist vorzugsweise, ob gestuft oder nicht, so ausgebildet, dass die Kette möglichst in einem Bereich geführt wird, der mit dem jeweiligen benutzten vorderen Kettenblatt korrespondiert.

Die, bezogen auf die Kettenzugrichtung, vorderen und hinteren Randbereiche des Gleitelements sind derart ausgebildet, dass der Reibungswiderstand und die Gefahr eines Verhakens oder Verklemmens der Kette minimiert sind.

Das Gleitelement weist vorzugsweise eine für die Kette reibungsarme Oberfläche auf, die zugleich unempfindlich gegenüber Schmutz und Nässe ist. Vorzugsweise ist die Oberfläche auf einem Tragelement angeordnet und lässt sich einfach austauschen. Dabei kann das Rollenelement in diesem und in jedem anderen Ausführungsbeispiel der Erfindung einstückig oder auch mehrstückig ausgeführt sein. Weiterhin weist das Rollenelement verschiedene diskrete Durchmesser auf. Dabei kann das Rollenelement beispielsweise als SGS-Rolle ausgeführt sein, die beispielsweise drei verschiedene Durchmesser aufweist, wobei der erste Durchmesser 12 Zähne, der zweite Durchmesser 11 Zähne und der dritte Durchmesser 10 Zähne aufweist. Aber auch andere Zahnverteilungen über das Rollenelement sind möglich.

Es sei explizit angemerkt, dass die Funktion der Kettenführung im Kontext der Erfindung stets im befestigten Zustand an der Kettenstrebe beschrieben wird, sofern nicht abweichend davon darauf hingewiesen wird.

Dabei kann die Aufnahmevorrichtung beispielsweise eine Bohrung, ein Gewinde, ein Klickverschluss oder eine sonstige Vorrichtung sein, die die Anbringung und Fixierung einer Kettenführung direkt an der Kettenstrebe erlaubt.

Mittels der erfindungsgemäßen Anbringung und Fixierung der Kettenführung an der Kettenstrebe kann vorteilhafterweise erreicht werden, dass bei einem gefederten Hinterbau des Fahrrades auch während eines Einfederns des Hinterbaus der Abstand zwischen der Kettenführung und der Kette konstant oder nahezu konstant bleibt. Dies wird ermöglicht durch die direkte Fixierung der Kettenführung an der Kettenstrebe, welche sich als Teil des Hinterbaus bei einer solchen Bewegung ebenso bewegt. Mit anderen Worten ist die Führung der Kette, die mittels der Erfindung erreicht wird, auch zu jedem Zeitpunkt einer Bewegung des Hinterbaus in der Lage, die laterale Position der Kette zu bestimmen und / oder zu halten, da auch zu diesen Zeitpunkten ein physischer Kontakt zwischen der Kettenführung und der Kette hergestellt bleibt.

Dabei kann die Aufnahmevorrichtung beispielsweise in einem Bereich angeordnet sein, der sehr nahe zum Tretlager des Fahrrades angeordnet ist. Beispielsweise kann der Abstand kleiner 12 cm, kleiner 10 cm, kleiner 8 cm oder kleiner 6 cm sein. Aufgrund der nahen Positionierung der Kettenführung an der Kettenstrebe zu dem Tretlager ist die gesamte Kettenführung in einer geschützten Position angeordnet, da sie durch die Kettenstrebe einerseits und die Kettenblätter andererseits geschützt wird. Dies kann zum vorteilhaften Vermeiden von mechanischen Schäden an der Kettenführung führen. Aber auch andere Anstände sind, falls gewünscht, möglich.

In diesem Fall der Platzierung der Aufnahmevorrichtung nahe an dem Tretlager ist es von weiterem Vorteil, dass beispielsweise bei einem Rückwärtstreten des Fahrrades die Kette sehr präzise an der Position auf dem gewünschten Kettenblatt gehalten werden kann. Dies geschieht, da der Abstand von der Kettenführung zu den Kettenblättern gerade sehr minimal gewählt ist. Mit anderen Worten ist es der Kette auf dem kurzen Stück zwischen der Kettenführung und der Stelle, an dem die Kette wieder physischen Kontakt mit den Kettenblättern bekommt, nicht möglich, eine derart große laterale Auslenkung zu erfahren, dass ein unerwünschter Positionswechsel der Kette auf den Kettenblättern erfolgt. Mit anderen Worten wird die Kette durch die erfindungsgemäße Kettenführung und Kettenstrebe auch bei einer Rückwärtsbewegung der Kette an der gewünschten Position auf den Kettenblättern gehalten. Dabei entspricht die gewünschte Position auf den Kettenblättern meist der Position, die vom Benutzer mittels eines vorderen Umwerfers gewählt wird.

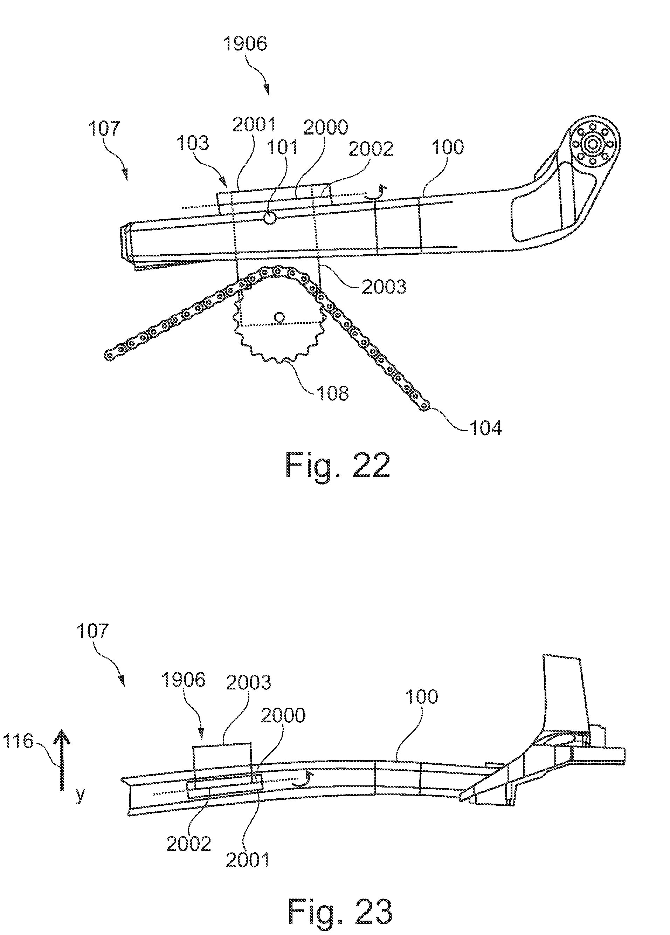

Beispielsweise kann die Aufnahmevorrichtung als Bohrung und/oder als Gewinde an der Unterseite der Kettenstrebe im vorderen Bereich nahe dem Tretlager angeordnet sein. Aber auch eine Anordnung der Aufnahmevorrichtung im mittleren Bereich der Kettenstrebe zwischen dem ersten Ende der Kettenstrebe am Tretlager und dem zweiten Ende der Kettenstrebe im hinteren Bereich des Ausfallendes ist möglich. Dabei kann beispielsweise eine Bohrung und/oder ein Gewinde an der Oberseite der Kettenstrebe im mittleren Bereich angeordnet sein, an welcher Bohrung beispielsweise ein Gehäuse für die Kettenführung angebracht werden kann. Dieses Gehäuse kann beispielsweise eine Drehachse mit einem Schwingarm enthalten, an welchem Schwingarm beispielsweise ein Rollenelement angebracht ist. Dabei kann das Gehäuse, die Drehachse, der Schwingarm und das Rollenelement als Kettenführung aufgefasst werden. Diese Möglichkeit der Ausführung einer Kettenführung ist später genauer in den Figuren 22 und 23 beschrieben.

Weiterhin ist es als Vorteil der Erfindung anzusehen, dass die Kettenführung nicht hinter den Kettenblätter am Tretlagergehäuse angebracht ist. Die Erfindung vermeidet somit ein zusätzliches Demontieren der Kettenblätter beim Anbringen der Kettenführung. Dies kann sowohl Zeit beim Einbau der Kettenführung bedeuten, als auch fehlerhafte Montierungen an den Kettenblättern können verhindert werden.

Dabei kann in diesem und jedem Ausführungsbeispiel der Erfindung die Kettenstrebe Teil einer Schwinge eines gefederten Hinterradrahmens sein, der sowohl einstückig als auch mehrstückig ausgeführt sein kann.

Die Aufnahmevorrichtung kann falls gewünscht als einzelnes Gewinde ausgeführt sein. Im Gegensatz zu bekannten Technologien reicht gemäß diesem Ausführungsbeispiel der Erfindung ein Befestigungsmittel, um die Kettenführung an der Kettenstrebe zu befestigen.

Gemäß einem weiteren Ausführungsbeispiel der Erfindung ist die Aufnahmevorrichtung derart ausgeführt, dass bei der Befestigung der Kettenführung an der Kettenstrebe eine Führung der Kette bei einer Bewegung der Kette, die durch eine Kettenschaltung hervorgerufen wird, erfolgt.

Mit anderen Worten ist die Kettenführung in der Lage, eine Führung der Kette an verschiedenen lateralen Positionen und an Positionen verschiedener Höhen der Kette bereitzustellen.

Weiterhin sei angemerkt, dass es sich bei dieser Bewegung um eine Bewegung handeln kann, die zweidimensional, jeweils senkrecht zur Hauptbewegungsrichtung der Kette erfolgt. Also erstens um eine laterale seitliche Bewegung der Kette und zweitens um eine Bewegung der Kette hin zu einer anderen Höhe. Diese Lage- und Richtungsbezeichnungen werden später in den Figuren definiert und illustriert.

Dabei ist im Kontext der Erfindung unter dem Begriff Kettenschaltung ein Gangwechsel zu verstehen, der sowohl durch einen vorderen Umwerfer als auch durch ein hinteres Schaltwerk an einem Fahrrad verursacht werden kann.

Gemäß diesem Ausführungsbeispiel kann die Kettenführung beispielsweise als schwenkbarer Arm ausgeführt sein, der in der Lage ist, laterale Bewegungen der Kette in Bezug auf ihre Antriebsrichtung auszugleichen bzw. mit auszuführen. Mit anderen Worten erlaubt die Aufnahmevorrichtung dieses Ausführungsbeispiels eine Kettenführung, die dynamisch auf den Prozess der Kettenschaltung reagieren kann.

Gemäß einem weiteren Ausführungsbeispiel der Erfindung ist die Aufnahmevorrichtung zur formschlüssigen Aufnahme der Kettenführung bei der Befestigung der Kettenführung ausgeführt.

Dabei ist auch eine zumindest teilweise formschlüssige Aufnahme möglich. Dabei kann die Kettenführung beispielsweise ein Verbindungselement und ein Rollenelement aufweisen, wobei das Rollenelement den physischen Kontakt und damit die Führung der Kette herstellt und das Verbindungselement zur Anbringung an der Aufnahmevorrichtung ausgeführt ist. Dabei kann beispielsweise das Verbindungselement einen Sattel, eine Erhöhung, eine Vertiefung, und / oder eine sonstige Oberfläche aufweisen, die eine formschlüssige oder teilweise formschlüssige Verbindung mit der Aufnahmevorrichtung realisiert.

Gemäß einem weiteren Ausführungsbeispiel der Erfindung stellt das Gleitelement den physischen Kontakt und damit die Führung der Kette her, wobei ein Verbindungselement zur Anbringung an der Aufnahmevorrichtung vorgesehen ist. Dabei kann beispielsweise das Verbindungselement einen Sattel, eine Erhöhung, eine Vertiefung, und / oder eine sonstige Oberfläche aufweisen, die eine formschlüssige oder teilweise formschlüssige Verbindung mit der Aufnahmevorrichtung realisiert.

Gemäß einem weiteren Ausführungsbeispiel der Erfindung ist die Aufnahmevorrichtung an einer Unterseite der Kettenstrebe angeordnet.

Dieses Ausführungsbeispiel der Erfindung kann bei Platzierung der Aufnahmevorrichtung im vorderen Kettenstrebe nahe dem Tretlager eine sichere Anordnung der Kettenführung in dem geschützten Bereich zwischen den Kettenblättern und der Kettenstrebe ermöglichen.

Gemäß einem weiteren Ausführungsbeispiel der Erfindung weist die Aufnahmevorrichtung ein Führungselement und zumindest eine Bohrung auf, wobei das Führungselement ein Aufschieben der Kettenführung auf die Kettenstrebe ermöglicht und wobei die Bohrung eine Fixierung der Kettenführung in einem aufgeschobenen Zustand ermöglicht.

Dabei kann das Führungselement zum Beispiel als Führungsschiene ausgeführt sein.

Mit anderen Worten korrespondiert mit diesem Ausführungsbeispiel der Erfindung ein Verfahren, bei dem die Kettenführung in einem ersten Schritt auf die Kettenstrebe mit ihrer Aufnahmevorrichtung und ihrem Führungselement aufgeschoben wird. In einem zweiten Schritt wird die Kettenführung beispielsweise mittels eines Befestigungsmittels wie einer Schraube in der Bohrung, die auch als Gewinde ausgeführt sein kann, fixiert. Dabei kann gerade dieses Führungselement in Kombination mit der anzubringenden Kettenführung derart ausgeführt sein, dass sich ein Formschluss zwischen dem Führungselement der Aufnahmevorrichtung und der Kettenführung ergibt. Beispielsweise kann ein Verbindungselement der Kettenführung eine Oberfläche aufweisen, die an die Oberfläche des Führungselements derart angepasst ist, dass sich ein Formschluss ergibt. Es ist weiterhin auch möglich, dass eine Zwischenplatte, die auch Teil der Kettenführung ist zwischen dem Verbindungselement und der Aufnahmevorrichtung zur Erzeugung eines Formschlusses eingesetzt wird. In diesem Fall fungiert die Zwischenplatte als Adapter.

Gemäß einem weiteren Ausführungsbeispiel der Erfindung ermöglicht das Führungselement eine zweidimensionale Ausrichtung der Kettenführung bei der Befestigung der Kettenführung.

Beispielsweise kann die Kettenführung ein Verbindungselement und eine Zwischenplatte sowie ein Rollenelement oder Gleitelement aufweisen. Dabei kann die Form und Dimensionierung des Führungselements an der Kettenstrebe derart ausgeführt, dass sich die anzubringende Kettenführung vor einer Fixierung in zweidimensionaler Weise bewegt werden kann, um eine Feinjustage der Kettenführung vorzunehmen. Dies vermag einen erleichterten und genaueren Einbau der Kettenführung bereitzustellen.

Gemäß einem weiteren Ausführungsbeispiel der Erfindung ist ein erster Abstand zwischen der Aufnahmevorrichtung und dem Tretlagergehäuse geringer als ein zweiter Abstand zwischen einem Hinterrad und dem Tretlagergehäuse.

Mit anderen Worten ist die Aufnahmevorrichtung derart dicht an dem Tretlagergehäuse positioniert, dass sich die oben beschriebenen Vorteile dieser Positionierung für die Kettenführung ergeben.

Dabei kann sich die Aufnahmevorrichtung insbesondere an der Unterseite der Kettenstrebe befinde. Mit diesem Ausführungsbeispiel kann erreicht werden, dass die Kettenführung lediglich physikalischen Kontakt mit der Kettestrebe an der Unterseite mit der Kettenstrebe aufnimmt. Damit kann eine teilweise Ummantelung der Kettenführung vermieden werden, wie es beispielsweise bei einer schellenartigen Konstruktion der Fall wäre. In diesem Bereich, der dem Tretlager sehr nahe ist, ist üblicherweise sehr wenig Platz zwischen der Kettenstrebe und dem Hinterrad. Aufgrund der erfindungsgemäßen Aufnahmevorrichtung an der Unterseite der Kettenstrebe, an welcher die Kettenführung beispielsweise verschraubt werden kann, vermeidet es dieses Ausführungsbeispiel der Erfindung, in diesen ohnehin schon sehr engen Bereich an der Innenseite der Kettenstrebe hineinzuragen. Damit kann sowohl eine Beschädigung des Hinterrades durch die Kettenführung sowie eine Beschädigung der Kettenführung durch das Hinterrad vermieden werden.

Gemäß einem weiteren Ausführungsbeispiel der Erfindung ist die Aufnahmevorrichtung in einem mittleren Bereich der Kettenstrebe zwischen dem Tretlagergehäuse des Fahrrades und dem Bereich eines hinteren Ausfallendes angeordnet.

Da in diesem Bereich der Kettenstrebe mehr Platz zwischen der Kettenstrebe und dem Hinterrad bereitgestellt wird, ist in diesem Bereich auch die Verwendung einer Kettenführung möglich, welche eine schellenartige Ummantelung der Kettenstrebe verwendet. Dabei kann in diesem Ausführungsbeispiel der Erfindung beispielsweise ein schwenkbarer Arm der Kettenführung zum Einsatz kommen, welcher Bewegungen der Kette, die durch Kettenschaltungen hervorgerufen werden, mit ausführen kann.

Erfindungsgemäß ist eine Kettenführung zur Führung einer Fahrradkette und zur Anbringung an einer Kettenstrebe an einem Fahrradhinterbau vorgesehen. Die Kettenführung weist eine Kettenführungsvorrichtung auf, die derart ausgebildet ist, dass die Kette bei Bewegungen der Kette, die durch eine Kettenschaltung hervorgerufen wird, durch die Kettenführungsvorrichtung geführt wird.

Gemäß einem weiteren Ausführungsbeispiel der Erfindung weist die Kettenführung ein Gleitelement auf, das derart ausgebildet ist, dass eine Kette bei Bewegungen der Kette, die durch eine Kettenschaltung hervorgerufen wird, durch das Gleitelement innerhalb eines gewünschten Positionsbereichs gehalten wird.

Beispielsweise ist das Gleitelement derart sattelförmig ausgebildet sein, dass die Kette auf dem Sattel aufliegt, oder den Sattel berührt, und bei einer Tretbewegung auf dem Sattel entlang gleitet, wobei das Gleitelement derart ausgebildet ist, dass die Kette bei lateralen Bewegungen der Kette, die durch eine Kettenschaltung hervorgerufen wird, durch das Gleitelement innerhalb eines gewünschten Positionsbereichs gehalten oder geführt wird.

Gemäß einem weiteren Ausführungsbeispiel der Erfindung weist die Kettenführung ein Rollenelement auf, wobei das Rollenelement zumindest einen ersten Bereich mit einem ersten Durchmesser und einen zweiten Bereich mit einem zweiten Durchmesser aufweist. Der erste und der zweite Durchmesser sind unterschiedlich und der erste Bereich ist zur Führung der Kette in einer ersten Position der Kette auf Kettenblättern des Fahrrads ausgeführt und der zweite Bereich ist zur Führung der Kette in einer zweiten Position der Kette auf den Kettenblättern des Fahrrads ausgeführt. Weiterhin wird ein Wechsel der Kette von der ersten in die zweite Position durch eine Kettenschaltung verursacht wird.

Dieses Ausführungsbeispiel der Erfindung hat den Vorteil, dass in jeder Position der Kette vor und nach einem Schaltvorgang immer ein physikalischer Kontakt zwischen der Kettenführung beispielsweise dem Rollenelement und der Kette hergestellt bleibt. Dies bedeutet erheblichen Fahrkomfort und Trittsicherheit für den Benutzer.

Gemäß einem weiteren Ausführungsbeispiel der Erfindung ist ein Kettenführungssystem mit einer Kettenstrebe gemäß einem der vorherigen Ausführungsbeispiele angegeben. Weiterhin weist das Kettenführungssystem eine Kettenführung zur Führung einer Kette auf, wobei die Kettenführung eine Kettenführungsvorrichtung aufweist, die derart ausgebildet ist, dass die Kette bei Bewegungen der Kette, die durch eine Kettenschaltung hervorgerufen wird, durch die Kettenführungsvorrichtung geführt wird.

Gemäß einem weiteren Ausführungsbeispiel der Erfindung weist die Kettenführung ein Gleitelement auf, das derart ausgebildet ist, dass eine Kette bei Bewegungen der Kette, die durch eine Kettenschaltung hervorgerufen wird, durch das Gleitelement innerhalb eines gewünschten Positionsbereichs gehalten wird.

Gemäß einem weiteren Ausführungsbeispiel der Erfindung weist die Kettenführung ein Rollenelement auf. Dabei ist das Rollenelement derart ausgeführt, dass die Kette bei Bewegungen der Kette, die durch eine Kettenschaltung hervorgerufen wird, durch das Rollenelement in gewünschter Position gehalten wird.

Es sei erneut explizit darauf hingewiesen, dass die bisher beschriebenen Ausführungsbeispiele und Vorteile der Erfindung gleichermaßen die Kettenführung, das Kettenführungssystem und das Fahrrad betreffen.

Gemäß einem weiteren Ausführungsbeispiel der Erfindung ist ein Kettenführungssystem angegeben, wobei das Rollenelement zumindest einen ersten Bereich mit einem ersten Durchmesser und einen zweiten Bereich mit einem Durchmesser aufweist, wobei der erste und der zweite Durchmesser unterschiedlich sind und wobei der erste Bereich zur Führung der Kette in einer ersten Position der Kette auf Kettenblättern des Fahrrades ausgeführt ist, und wobei der zweite Bereich zur Führung der Kette in einer zweiten Position der Kette auf den Kettenblättern ausgeführt ist. Weiterhin wird ein Wechsel der Kette von der ersten in die zweite Position durch eine Kettenschaltung verursacht.

Gemäß einem weiteren Ausführungsbeispiel der Erfindung sind die unterschiedlichen Durchmesser des Rollenelements derart an Durchmesser der Kettenblätter des Fahrrades angepasst, dass eine Veränderung eines Umschlingungswinkels der Kette um das Rollenelement bei Änderungen der Position der Kette auf den Kettenblättern minimiert wird.

Gemäß einem weiteren Ausführungsbeispiel der Erfindung weist das Gleitelement eine Fläche auf, die derart geneigt verläuft, dass die Neigungsrichtung an die unterschiedlichen Durchmesser der vorderen Kettenblätter angepasst ist, so dass eine Veränderung eines Umschlingungswinkels der Kette um das Gleitelement bei Änderungen der Position der Kette auf den Kettenblättern minimiert wird.

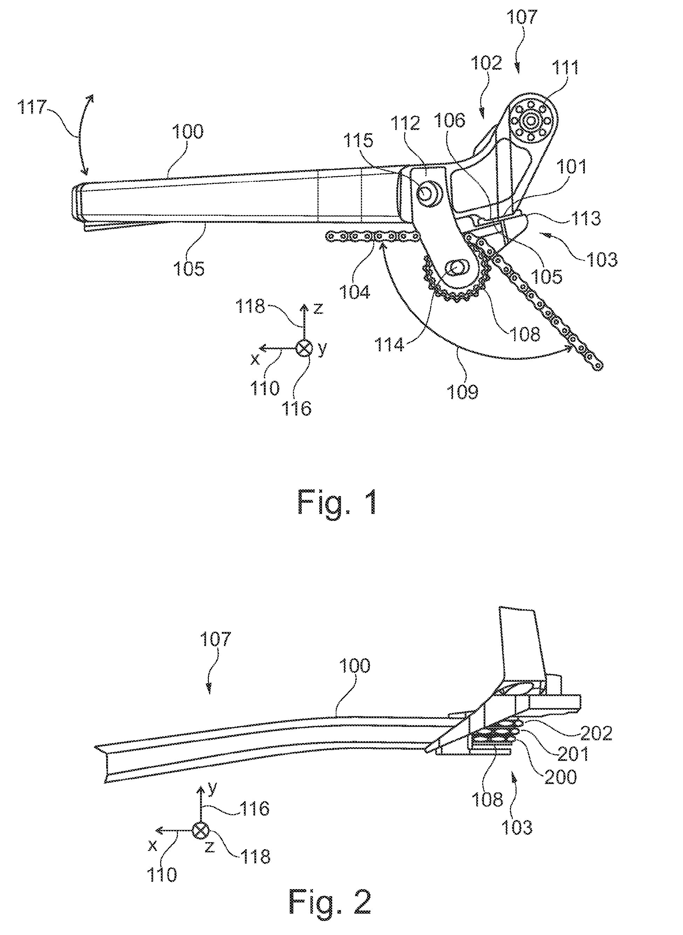

Mit anderen Worten weist das Rollenelement bei zwei vorhandenen Kettenblättern zwei unterschiedliche Durchmesser und bei drei vorhandenen Kettenblättern drei unterschiedliche Durchmesser auf. Aber auch eine Abweichung davon ist möglich. Mit anderen Worten ist die Kettenführung in ihrer Bereitstellung unterschiedlicher Durchmesser und die Aufnahmevorrichtung derart ausgeführt, dass, wenn die Kette in einer ersten Position auf dem größten Kettenblatt positioniert ist, an der Kettenführung bzw. dem Rollenelement in dem ersten Bereich mit einem ersten kleinen Durchmesser auflegt, wenn die Kette auf dem mittleren Kettenblatt positioniert ist, die Kette auf dem zweiten Bereich mit einem mittleren Durchmesser des Rollenelements aufliegt und wenn die Kette auf dem kleinsten Kettenblatt positioniert ist, dass die Kette auf dem Rollenelement in einem dritten Bereich mit einem größten Durchmesser des Rollenelements aufliegt. Durch diese Konstruktion, die beispielsweise auch den späteren Fig. 1, 2, 3 sowie den Fig. 14 bis 16 entnommen werden kann, kann erreicht werden, dass der Umschlingungswinkel der Kette um das Rollenelement keine große Veränderungen bzw. keine Veränderung erfährt, wenn die Kette zu unterschiedlichen Positionen auf den Kettenblättern geschalten wird.

Mit anderen Worten erfolgt auf Grund der unterschiedlichen Durchmesser des Rollenelementes eine Maximierung des Umschlingungswinkels zwischen der Kette und dem Rollenelement in den verschiedenen Positionen, welche die Kette in verschiedenen Gängen einnimmt. Dies betrifft somit nicht nur Positionswechsel der Kette bei einem Wechsel von einem auf ein anderes Kettenblatt, sondern auch Positionswechsel, welche die Kette auf Grund von Schaltvorgängen am hinteren Schaltwerk vollzieht.

Dies hat den Vorteil, dass in jeder Position der Kette vor und nach einem Schaltvorgang immer ein physikalischer Kontakt zwischen der Kettenführung beispielsweise dem Rollenelement und der Kette hergestellt bleibt. Dies bedeutet erheblichen Fahrkomfort und Trittsicherheit für den Benutzer.

Gemäß einem weiteren Ausführungsbeispiel der Erfindung weist das Rollenelement drei unterschiedliche Durchmesser auf, wobei jeweils ein Durchmesser des Rollenelements mit je einer Position der Kette auf einem von drei Kettenblättern korrespondiert.

Gemäß einem weiteren Ausführungsbeispiel der Erfindung weist die Kettenführung ein Gelenk auf, wobei die Führung der Kette bei einer ersten Bewegung der Kette, die durch eine Kettenschaltung hervorgerufen wird, durch eine zweite Bewegung der Kettenführung um das Gelenk herum erfolgt.

Mit anderen Worten ist die Aufnahmevorrichtung in Kombination mit dieser Kettenführung derart ausgeführt, dass bei der Befestigung der Kettenführung an der Kettenstrebe eine Führung der Kette bei einer Bewegung der Kette, die durch eine Kettenschaltung hervorgerufen wird, erfolgt.

Wie beispielsweise in den folgenden Fig. 22 und 23 näher beschrieben wird, kann dieses Ausführungsbeispiel der Erfindung mittels mechanischen Elementen ausgeführt sein, die eine laterale Bewegung erlauben und damit bei einer lateralen Bewegung der Kette während oder nach einem Schaltvorgang dieser Bewegung folgen und somit in einem breiten lateralen Bereich die Kette wie gewünscht führen.

Gemäß einem weiteren Ausführungsbeispiel der Erfindung weist das Gelenk eine Drehachse auf und die Kettenführung weist einen schwenkbaren Arm auf. Weiterhin ist an dem Arm ein Rollenelement angebracht und wobei die Führung der Kette bei der Bewegung der Kette, die durch eine Kettenschaltung hervorgerufen wird, durch eine Schwenkbewegung des Arms erfolgt.

Gemäß einem weiteren Ausführungsbeispiel der Erfindung ist ein Fahrrad mit einem Hinterbau, an welchem eine Kettenstrebe gemäß einem der vorherigen Ausführungsbeispiele angegeben.

Gemäß einem weiteren Ausführungsbeispiel der Erfindung ist ein Fahrrad vorgesehen, bei dem eine Kettenführung nach einem der vorherigen Ausführungsbeispiele an einer Kettenstrebe nach einem der vorherigen Ausführungsbeispiele befestigt werden kann.

Gemäß einem weiteren Ausführungsbeispiel der Erfindung ist ein Fahrrad vorgesehen, bei dem eine Kettenführung nach einem der vorherigen Ausführungsbeispiele an einer Kettenstrebe nach einem der vorherigen Ausführungsbeispiele montiert ist.

Ergänzend sei darauf hingewiesen, dass "umfassend" und "aufweisend" keine anderen Elemente oder Schritte ausschließen und "eine" oder "ein" keine Vielzahl ausschließen. Ferner sei darauf hingewiesen, dass Merkmale oder Schritte, die mit dem Verweis auf eines der obigen Ausführungsbeispiele beschrieben worden sind, auch in Kombination mit anderen Merkmalen oder Schritten anderer oben beschriebener Ausführungsbeispiele der Erfindung verwendet werden können. Bezugszeichen in den Ansprüchen sind nicht als Einschränkungen anzusehen.

Im Folgenden werden mit Verweis auf die Figuren bevorzugte Ausführungsbeispiele der Erfindung beschrieben.

### KURZE BESCHREIBUNG DER FIGUREN:

Fig. 1 zeigt eine schematische, zweidimensionale Darstellung einer Kettenstrebe einer Kettenführung gemäß einem Ausführungsbeispiel der Erfindung.
Fig. 2 zeigt eine schematische, zweidimensionale Darstellung einer Kettenstrebe in Vogelperspektive gemäß einem Ausführungsbeispiel der Erfindung.
Fig. 3 zeigt eine schematische, zweidimensionale Darstellung einer Kettenstrebe mit einer Kettenführung gemäß einem Ausführungsbeispiel der Erfindung.
Fig. 4 zeigt eine schematische, zweidimensionale Darstellung einer Kettenstrebe mit einer Kettenführung gemäß einem Ausführungsbeispiel der Erfindung.
Fig. 5 zeigt eine schematische, zweidimensionale Darstellung einer Kettenstrebe mit einer Kettenführung gemäß einem weiteren Ausführungsbeispiel der Erfindung.
Fig. 6 zeigt die Kettenführung gemäß Fig. 5 in einem Ausschnitt.
Fig. 7 zeigt eine schematische, zweidimensionale Darstellung eines Teils einer Kettenstrebe mit einer Aufnahmevorrichtung gemäß einem Ausführungsbeispiel der Erfindung.
Fig. 8 zeigt eine schematische, zweidimensionale Darstellung einer Führungsplatte zur Befestigung einer Kettenführung an einer Kettenstrebe gemäß einem Ausführungsbeispiel der Erfindung.
Fig. 9 bis 13 zeigen schematische zweidimensionale Darstellungen eines Verbindungselementes einer Kettenführung zur Befestigung an einer Kettenstrebe gemäß unterschiedlichen Ausführungsbeispielen der Erfindung.
Fig. 14 bis 16 zeigen schematische, zweidimensionale Darstellungen eines Rollenelements als Teil eines Kettenführungssystem gemäß einem Ausführungsbeispiel der Erfindung.
Fig. 17 bis 20 zeigen schematische, zweidimensionale Darstellungen einer Zwischenplatte als Teil eines Kettenführungssystem gemäß einem Ausführungsbeispiel der Erfindung.
Fig. 21 zeigt eine schematische, zweidimensionale Darstellung eines Fahrrades mit einer Kettenstrebe gemäß einem Ausführungsbeispiel der Erfindung.
Fig. 22 und 23 zeigen schematische, zweidimensionale Darstellungen einer Kettenstrebe gemäß verschiedener Ausführungsbeispiele der Erfindung.

In den folgenden Figurenbeschreibungen werden für die gleichen oder ähnlichen Elemente die gleichen Bezugsziffern verwendet.

Die Darstellungen in den Figuren sind schematisch und nicht maßstäblich.

### DETAILLIERTE BESCHREIBUNG VON AUSFÜHRUNGSBEISPIELEN:

Fig. 1 zeigt eine Kettenstrebe 100 an einem Fahrradhinterbau, wobei die Kettenstrebe zumindest eine Aufnahmevorrichtung 101 aufweist. Die Kettenstrebe erstreckt sich zwischen dem Tretlagergehäuse des Fahrrades und einem Bereich eines hinteren Ausfallendes des Fahrrades. Dabei ist die Aufnahmevorrichtung Teil der Kettenstrebe selbst. Mit anderen Worten ist die Aufnahmevorrichtung integraler Bestandteil der Kettenstrebe. Weiterhin ist die Aufnahmevorrichtung zur Befestigung einer Kettenführung 103 an der Kettenstrebe ausgeführt. Weiterhin ist ein vorderer Bereich 102 der Kettenstrebe gezeigt, in welchem neben der Kettenführung 103 auch das Schwingenlager 111 gezeigt ist. Mit anderen Worten handelt es sich hierbei um eine Kettenstrebe eines gefederten Hinterbaus des Fahrrades.

Dabei sind im Kontext der vorliegenden Erfindung so lange nicht explizit abweichend davon definiert, die Begriffe "vorne" und "hinten" bzw. "vordere Bereiche" und "hintere Bereiche" in Bezug auf die x Koordinatenachse 110 angegeben. Somit weist die x-Achse von rechts nach links zunehmend größere Werte auf und große x-Werte beschreiben den hinteren Bereich der Kettenstrebe, kleinere x-Werte hingegen beschreiben den vorderen Bereich. Hintere Bereiche befinden sich somit in der gezeigten Darstellung im linken Bereich der Fig. 1, vordere Bereiche der Kettenstrebe hingegen befinden sich im rechten Teil der Fig. 1.

Dabei ist deutlich zu sehen, dass sich die Kette 104 bei einer Tretbewegung des Benutzers parallel zu der Kettenstrebe entlang der x-Achse bewegt. Weiterhin ist die y-Achse 116 gezeigt, welche schematisch dargestellt ist. Diese y-Achse 116 steht senkrecht auf der Ebene der gezeigten Fig. 1. Diese y-Achse 116 beschreibt somit Bewegungen der Kette in lateraler Richtung. Zusätzlich ist die z-Achse 118 gezeigt, welche verschiedene Höhen der Kette angibt, beispielsweise wenn die Kette ihre Position durch eine Schaltung der Kette (Kettenschaltung) verändert.

Die Aufnahmevorrichtung 101 ist beispielsweise derart ausgeführt, dass bei der Befestigung der Kettenführung an der Kettenstrebe eine Führung der Kette (104) bei einer Bewegung der Kette, die durch eine Kettenschaltung hervorgerufen wird, erfolgt.

Das gezeigte Kettenführungssystem 107 weist somit die Kettenstrebe 100 sowie die Kettenführung 103 zur Führung der Kette auf. Dabei weist die Kettenführung als Kettenführungsvorrichtung wiederum ein Rollenelement 108 auf, welches einstückig oder auch mehrstückig ausgeführt sein kann. Dabei ist das Rollenelement derart ausgeführt, dass die Kette bei Bewegungen der Kette, die durch eine Kettenschaltung hervorgerufen wird, durch das Rollenelement in einer gewünschten Position in y-Richtung und / oder in gewünschter Höhen in z-Richtung gehalten wird

Dabei weist das hier gezeigte Ausführungsbeispiel der Kettenführung weiterhin ein Verbindungselement 113 auf, welches Verbindungselement sowohl zur Aufnahme und Fixierung des Rollenelements 108 ausgeführt ist als auch zur Anbringung an die Aufnahmevorrichtung 101. In diesem Ausführungsbeispiel ist die Aufnahmevorrichtung 101 ein integraler Bestandteil der Kettenstrebe, welche Aufnahmevorrichtung ein Führungselement 106 bereitstellt. Dabei kann das Führungselement beispielsweise als Führungsschiene mit kubischer oder nicht kubischer äußerer Form ausgeführt sein.

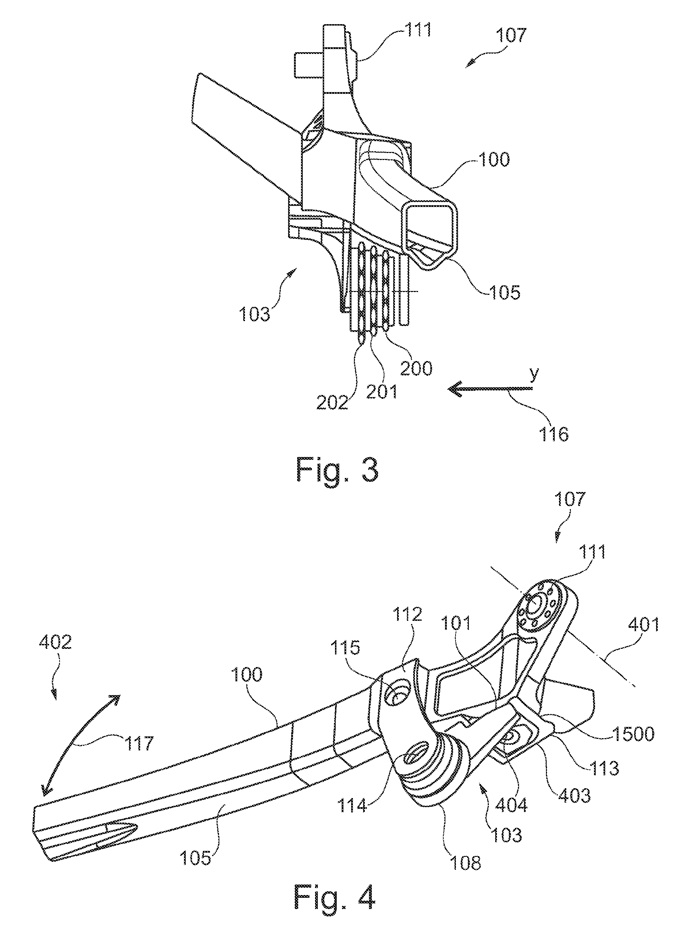

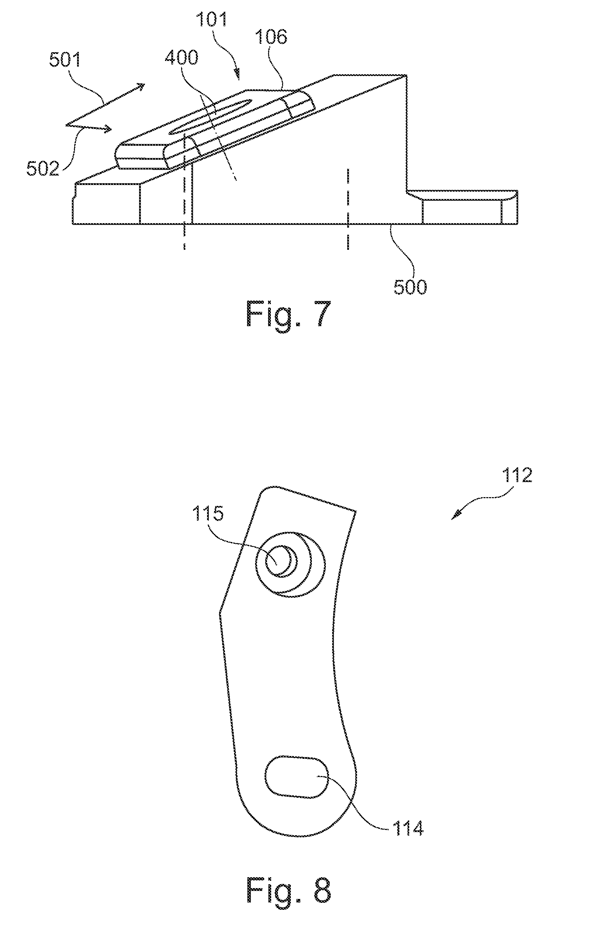

Die Aufnahmevorrichtung 101 ist also der Bereich der Kettenstrebe, der eine Bohrung aufweist, die in Fig. 1 nicht zu sehen ist (jedoch in den Figuren 4 und 7). Mittels der Bohrung kann das Verbindungselement 113 der Kettenführung 103 an der Kettenstrebe 100 beispielsweise mittels einer Schraube fixiert werden. Dabei sei explizit darauf hingewiesen, dass eine konkrete und detaillierte Ausgestaltung des Führungselements 106 der Aufnahmevorrichtung in der folgenden Fig. 7 beschrieben ist.

Fig. 1 zeigt weiterhin eine Kettenführung 103 mit einer Führungsplatte 112, welche Öffnungen 114 und 115 zu unterschiedlichen Fixierungszwecken aufweist. An der Öffnung 114 kann das Rollenelement 108 fixiert werden, welches beispielsweise unterschiedliche Durchmesser zur Kettenführung bereitstellen kann. Aufgrund der Öffnung 115 kann die Führungsplatte und damit die Kettenführung 103 an der Außenseite der Kettenstrebe 100 fixiert werden. Es ist beispielsweise möglich, die Kettenführung 103 zur Positionierung und Justage, bzw. Justierung, des Verbindungselements 113 an dem Führungselement 106 der Kettenstrebe in einem ersten Schritt auszurichten und beispielsweise winkelgerecht zu orientieren und in einem zweiten Schritt durch beispielsweise eine Verschraubung in der Bohrung (nicht gezeigt) im Bereich des Führungselements 106 zu fixieren. Aber auch eine Fixierung mittels Verschraubung an der Öffnung 115 ist möglich.

Dabei kann in diesem und jedem Ausführungsbeispiel der Erfindung die Kettenstrebe Teil einer Schwinge eines gefederten Hinterradrahmens sein, der sowohl einstückig als auch mehrstückig ausgeführt sein kann.

Weiterhin ist der Umschlingungswinkel 109 gezeigt, der die Umschlingung der Kette 104 um das Rollenelement 108 beschreibt. Je kleiner der Umschlingungswinkel 109 ist, desto größer ist die Auflagefläche auf dem Rollenelement und entsprechend größer ist die gewünschte Führung der Kette in lateraler y-Richtung 116 sowie unter Umständen auch in der Hauptbewegungsrichtung der Kette x 100.

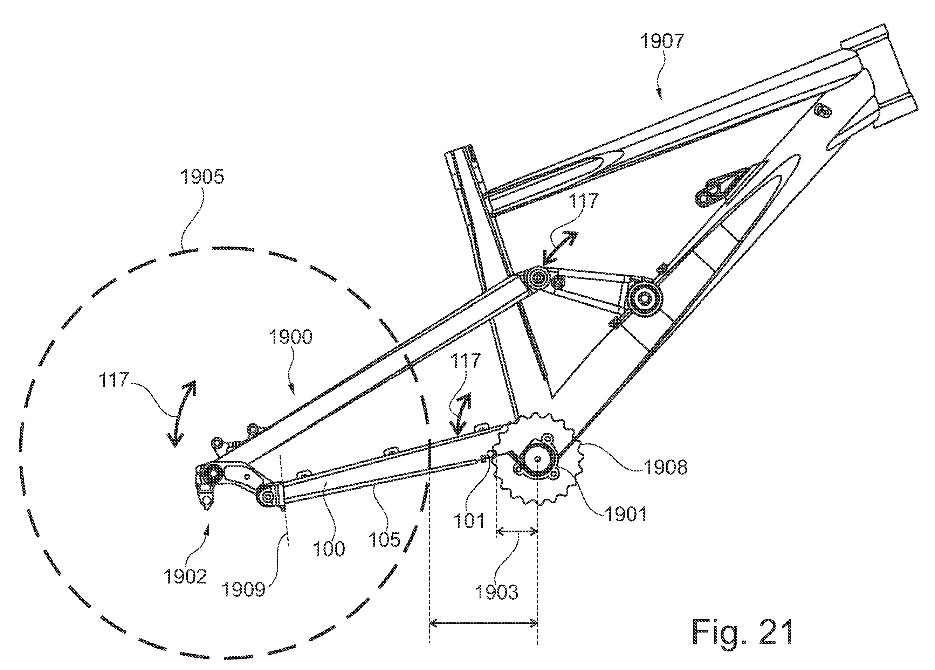

Dabei sei explizit darauf hingewiesen, dass der rechte vordere Teil 102 der Kettenstrebe 100 direkt an den Bereich des Tretlagers des Fahrrades (nicht gezeigt) anschließt. Dies wird in der folgenden Fig. 21 detailliert und deutlich gezeigt und beschrieben. Die Anbringung der Kettenführung 113 an der Unterseite der Kettenstrebe 105 an der Aufnahmevorrichtung 101 in diesem sehr Tretlager nahen Bereich vermag verschiedene Vorteile für den Benutzer des Fahrrades bedeuten. Beispielsweise ist die Kettenführung 103 in diesem vorderen Bereich 102 in einem Bereich angeordnet, der sich zwischen der Kettenstrebe 100 und den Kettenblättern (nicht gezeigt) befindet. Damit ist die Kettenführung 103 vor mechanischen Einflüssen besser geschützt. Weiterhin ist bei einer Bewegung des Hinterbaus die durch den Pfeil 117 dargestellt ist, und die beispielsweise aufgrund des Schwingenlagers 111 ermöglicht wird, gegeben, dass sich der Abstand zwischen der Kette 104 und dem Rollenelement 108 zur Führung der Kette nur minimal oder gar nicht verändert. Dies bedeutet eine verbesserte Führung der Kette in Situationen, in welchen aufgrund von Unebenheiten des Geländes Bewegungen des Hinterbaus verursacht werden.

Mit anderen Worten ist das Ausführungsbeispiel der Erfindung aus der Fig. 2 in der Lage, den Abstand der Rolle zur Kettenstrebe konstant zu halten und ein permanenter Kontakt von Kette und Rolle ist unabhängig von der Dynamik des Hinterbaus gegeben.

Ebenso ist aufgrund dieser Tretlager nahen Anordnung der Kettenführung 103 gewährleistet, dass beispielsweise bei einem Rückwärtstreten während des Fahrens die Kette nicht von den Kettenblättern abfällt, da der Abstand zwischen dem Rollenelement 108 und den Kettenblättern minimiert ist. Mit anderen Worten ist das gezeigte Kettenführungssystem 107 in der Lage, die Kette 104 auch derart beim Rückwärtstreten zu führen, dass ein unerwünschter Schaltvorgang auf den Kettenblättern erfolgt.

Fig. 2 zeigt die Strebe 100 des Kettenführungssystems 107 aus Fig. 1 in einer Draufsicht. Dabei ist deutlich zu sehen, dass das Rollenelement 108 einen ersten Bereich 200 mit einem ersten Durchmesser und einen zweiten Bereich 201 mit einem zweiten Durchmesser aufweist. Dabei sind die beiden Durchmesser unterschiedlich. Weiterhin ist ein dritter Bereich 202 gezeigt, der ebenfalls einen von den ersten beiden Durchmessern abweichenden Durchmesser aufweist. Dabei ist der erste Bereich 200 zur Führung der Kette in einer ersten Position der Kette auf den Kettenblättern ausgeführt und der zweite Bereich ist zur Führung der Kette in einer zweiten Position der Kette auf den Kettenblättern des Fahrrades ausgeführt. Dabei ist das Rollenelement in seinen drei Durchmessern derart an die Kettenblätter angepasst, dass ein Wechsel der Kette von der ersten in die zweite Position oder von der zweiten in die dritte Position durch eine Kettenschaltung verursacht wird.

Mit anderen Worten korrespondieren die drei Bereiche 200, 201 und 202 jeweils mit einer Position der Kette auf den Kettenblättern.

Mit anderen Worten ist die Kettenführung 103 in der Lage, die Kette mit den oben beschriebenen Vorteilen in verschiedenen lateralen Positionen entlang der y-Achse 116 und entlang der z-Achse 118 in verschiedenen Höhen zu führen. Diese verschiedenen Positionen entlang der y- und z-Achse 116 können beispielsweise durch einen gewünschten Schaltvorgang, der von einem Benutzer des Fahrrades verursacht wird, eingenommen werden.

Dabei kann auch in diesem gezeigten Ausführungsbeispiel das Rollenelement 108 einstückig oder mehrstückig ausgeführt sein. Beispielsweise kann das Rollenelement 103 aus zwei oder drei Teilen bestehen, wobei jeweils ein Teil einen unterschiedlichen Durchmesser der Bereiche 200 bis 202 bereitstellt. Es ist weiterhin möglich, dass die Form des Rollenelements eine konische Form aufweist, womit ein kontinuierliches Spektrum an Durchmessern zur Führung der Kette bereitgestellt wird.

Fig. 3 zeigt das Ausführungsbeispiel der Fig. 1 und 2 in einer Rückansicht. Mit anderen Worten ist ein Kettenführungssystem 107 mit einer Kettenstrebe 100 gezeigt, an welcher an der Aufnahmevorrichtung 101 die Kettenführung 103 an der Unterseite 105 der Kettenstrebe justiert, positioniert und fixiert ist. Dabei sind die verschiedenen Bereiche 200 bis 202 mit unterschiedlichen Durchmessern gezeigt. Weiterhin ist in Fig. 3 die laterale Richtung oder auch y-Richtung 116 gezeigt.

Gemäß einem nicht näher dargestellten Ausführungsbeispiel der Kettenstrebe weist die Aufnahmevorrichtung ein Führungselement und zumindest eine Bohrung auf, wobei das Führungselement ein Aufschieben der Kettenführung auf die Kettenstrebe ermöglicht; und wobei die Bohrung eine Fixierung der Kettenführung in einem aufgeschobenen Zustand ermöglicht.

Gemäß einem weiteren Ausführungsbeispiel (ebenfalls nicht weiter gezeigt) ermöglicht das Führungselement eine zweidimensionale Ausrichtung einer Kettenführung bei der Befestigung der Kettenführung.

Fig. 4 zeigt ein weiteres Ausführungsbeispiel der Erfindung, welches ein Kettenführungssystem 107 mit einer Kettenstrebe 101 und einer Kettenführung 103 aufweist. Dabei ist die Drehachse 401 der Hinterradschwinge 402 gezeigt, welche als Bestandteil die Kettenstrebe 100 aufweist. Mittels des Schwingenlagers 111 ist somit eine Bewegung 117 der Kettenstrebe möglich. Dabei weist in diesem Ausführungsbeispiel der Erfindung die Kettenführung 103 das Verbindungselement 113, das Rollenelement 108, die Führungsplatte 112 mit den Öffnungen 114 und 115 auf. Die Aufnahmevorrichtung 101 der Kettenstrebe bildet dabei einen Bereich der zur Aufnahme des Verbindungselements ein besondere Kontur und eine Bohrung aufweist. Diese sind detailliert in Fig. 7 beschrieben.

In Fig. 4 ist die Aufnahmevorrichtung 101 auf Grund des montierten Zustandes der Kettenführung durch den abgewinkelten rechteckigen Bereich 403 des Verbindungselementes 113 verdeckt. Dabei kann dieser abgewinkelte und rechteckige Bereich 403 falls gewünscht einen Formschluss mit der Aufnahmevorrichtung 101 bilden. Weiterhin weist dieser abgewinkelte rechteckige Bereich 403 der Kettenführung eine Bohrung 404 auf, welche bei der Justage an der Aufnahmevorrichtung 101 mit einer weiteren Bohrung 400 (nicht gezeigt) in der Kettenstrebe zum Überlappen gebracht wird. Nach einer beispielsweisen winkelgerechten Orientierung des Rollenelements 108 durch zweidimensionales Verschieben des Verbindungselementes 113 gegenüber der Aufnahmevorrichtung 101 kann im Anschluss ein Fixieren erfolgen.

Es sei explizit darauf hingewiesen, dass der bisher aufgrund der montierten Position der Kettenführung an der Kettenstrebe verdeckt gezeigte Bereich der Aufnahmevorrichtung deutlich jedoch beispielhaft in Fig. 7 gezeigt ist.

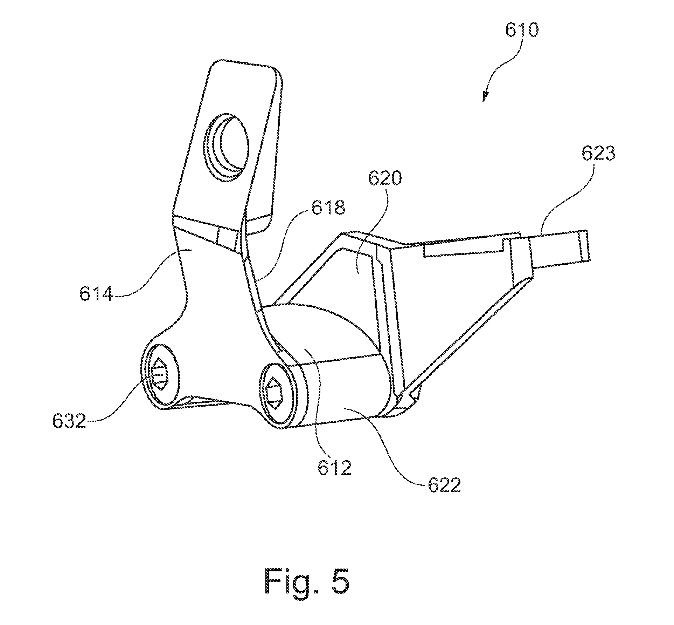

Fig. 5 zeigt ein weiteres exemplarisches Ausführungsbeispiel einer Kettenführung 610, bei der als eine Kettenführungsvorrichtung ein Gleitelement 612 vorgesehen ist. Die Kettenführung 610 weist eine Haltevorrichtung 614 auf, zur Befestigung an einer (in Fig. 5 nicht näher gezeigten) Kettenstrebe nach einem der vorherigen Ausführungsbeispiele.

Beispielsweise weist das Gleitelement 612 eine sattelförmige Gleitfläche 616 aus, die derart ausgebildet ist, dass eine Kette darauf aufliegen und bei einer Tretbewegung reibungsarm auf der Oberfläche gleiten kann. Die Sattelfläche 616 ist seitlich von zwei Wandbereichen 618, 620 begrenzt. Die vorderen und hinteren Ränder der Sattelfläche 616 sind mit abgerundeten Übergängen 622 ausgebildet.

Der eine Wandbereich 618 bildet beispielsweise einen Bereich der Halterung 614. Der gegenüberliegende Bereich ist ebenfalls als Halterung ausgebildet, um an einer zweiten Stelle mit der Kettenstrebe 616 in Kontakt zu stehen, beispielsweise mit einer in eine Aufnahme eingeschobenen Lasche 623.

Die gegenüberliegende Wandung kann aber auch nur als Anschlag bzw. Führungswand ausgebildet sein, d.h. die Kettenführung wird nur an einem Punkt an der Kettenstrebe festgelegt, was jedoch nicht näher gezeigt ist.

Das Gleitelement führt die Kette, insbesondere bei lateralen Bewegungen der Kette, die durch eine Kettenschaltung hervorgerufen wird, innerhalb eines gewünschten Positionsbereichs, der durch die Sattelfläche definiert ist.

Das Gleitelement 612 weist beispielsweise eine durchgehende Fläche auf, die im montierten Zustand bei aufrecht stehendem Fahrrad in lateraler Richtung, also in Y-Richtung bzw. senkrecht zur Zugrichtung der Kette, horizontal verläuft.

Das Gleitelement 612 ist so ausgebildet, dass auf einen lateralen Positionswechsel der Kette aufgrund einer Kettenschaltung hinsichtlich der Führung der Kette derart reagiert werden kann, dass in jeder lateralen Position der Kette die gewünschte Führung der Kette erreicht wird. Die Kette wird so in jedem Betriebszustand in der gewünschten Position, bzw. innerhalb des Positionsbereichs gehalten.

Gemäß einer nicht weiter gezeigten Ausführung ist die Gleitfläche geneigt ausgebildet. Die Gleitfläche könnte aber auch mit Absätzen bzw. Stufen ausgebildet sein, wobei die Stufen horizontal und/oder geneigt ausgebildet sein können. Beispielsweise sind drei Stufen vorgesehen. Z.B. sind die drei Stufen horizontal ausgebildet. In einem anderen Beispiel sind die Stufen alle geneigt ausgebildet, wobei die Neigung gleich oder auch unterschiedlich stark ausgebildet sein kann. In einem anderen Beispiel ist die mittlere Stufe horizontal und die beiden äußeren Stufen sind gleich oder unterschiedlich geneigt ausgebildet. Eine Stufung kann dabei gleich oder unterschiedlich ausgebildet sein. Auch Zwischenstufen sind möglich, um einen Wechsel der Kette von einem Teilbereich zum nächsten zu unterstützen.

Die Gleitfläche ist vorzugsweise, ob gestuft oder nicht, ob geneigt oder nicht, so ausgebildet, dass die Kette möglichst in einem Bereich geführt wird, der mit dem jeweiligen benutzten vorderen Kettenblatt korrespondiert.

Das Gleitelement 612 ist in der Halterung 614 so befestigt, dass es sich leicht austauschen lässt, z.B. durch Verschraubungen 632. Statt zwei Schrauben können auch eine oder mehr als zwei Schrauben vorgesehen sein. Beispielsweise können auch verschiedene Gleitelemente in ein und dieselbe Halterung eingesetzt werden, je nach Einsatzgebiet und gewünschter Kettenführung.

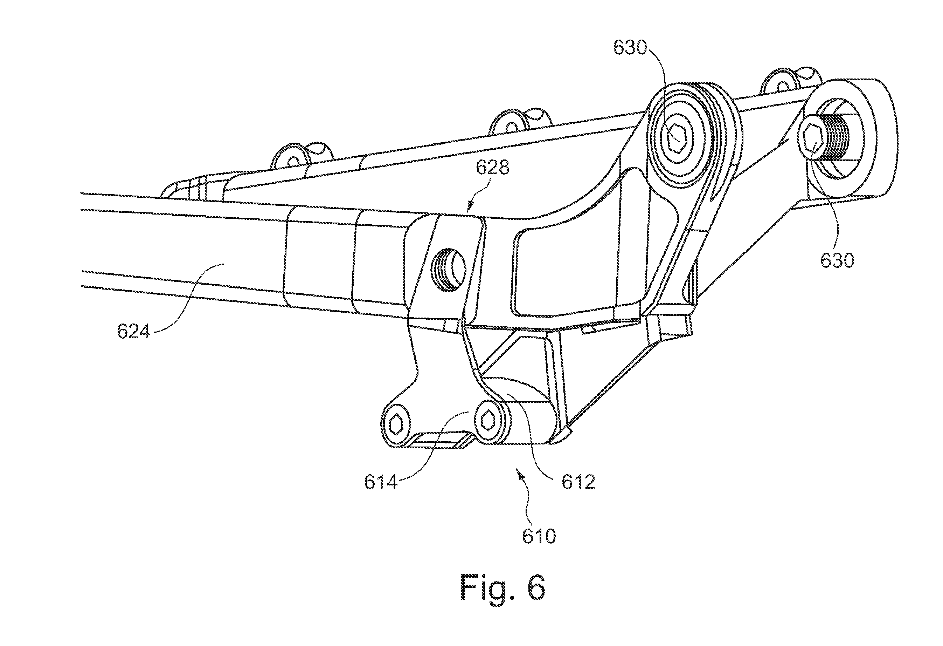

In Fig. 6 ist die Kettenführung 610 aus Fig. 5 im Zusammenhang mit einer Kettenstrebe 624 gezeigt, die im wesentlichen den vorherigen Ausführungsbeispielen einer Kettenstrebe entspricht. Die Kettenführung ist mit der Halterung 614 an der Kettenstrebe über eine Befestigungsvorrichtung 626 an einer Aufnahmevorrichtung 628 der Kettenstrebe befestigt, beispielsweise mit einer Verschraubung.

Beispielsweise ist die Befestigung an der Kettenstrebe seitlich vorgesehen.

Gemäß einer anderen Ausführungsform ist die Aufnahmevorrichtung an der Unterseite der Kettenstrebe vorgesehen.

Wie ersichtlich ist, kann es sich bei der Kettenstrebe um eine Kettenstrebe eines gefederten Fahrradhinterbaus handeln, die an dem Rahmen schwenkbar angelenkt ist, was mit Gelenkpunkten 630 angedeutet ist. Fig. 7 zeigt einen Ausschnitt 500 einer Kettenstrebe 100, wie sie beispielsweise in den Fig. 1 bis 4 beschrieben ist. Dabei ist in detaillierter Darstellung die Aufnahmevorrichtung 101 gezeigt, welche hier eine kubische Form mit abgeflachten Ecken und Kanten aufweist. Aber auch andere geometrische Formen der Aufnahmevorrichtung sind möglich. Weiterhin weist die Aufnahmevorrichtung eine Bohrung 400 auf mittels welcher das zuvor beschriebene Verbindungselement 113 der Kettenführung 103 an der Kettenstrebe 100 befestigt werden kann.

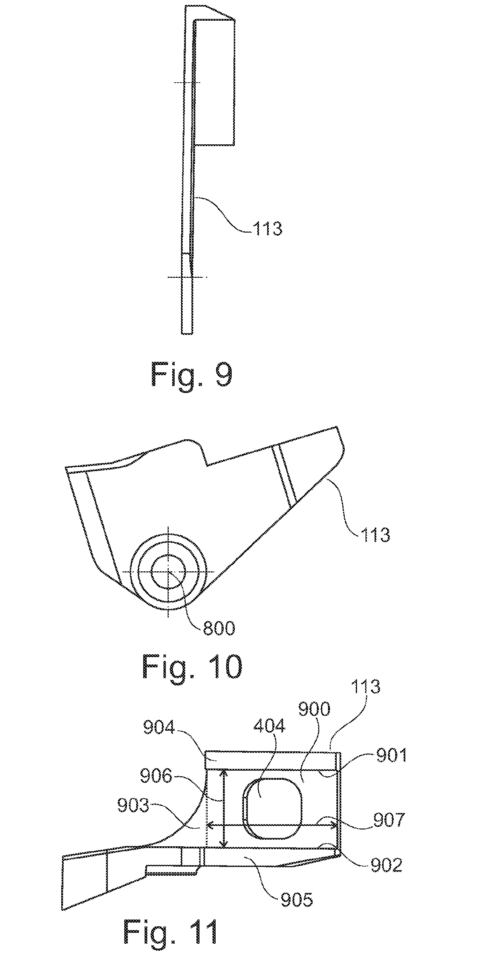

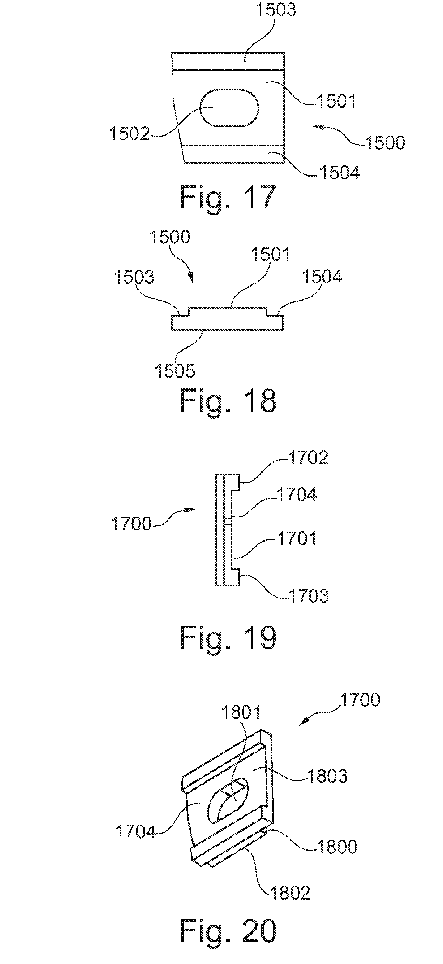

Mit anderen Worten wird die Aufnahmevorrichtung 101 durch den Bereich der Kettenstrebe gebildet, der das Führungselement 106 und die Bohrung 400 aufweist. Aufgrund des Kantenverlaufs der verschiedenen äußeren Kanten des Führungselements 106 kann das in Fig. 9 bis 13 näher beschriebene Verbindungselement beispielsweise auch in Kombination mit einer Zwischenplatte, die in den Fig. 18 bis 20 gezeigt ist, dazu verwendet werden, um auf dem Führungselement 106 die Kettenführung mit einem Rollenelement zu orientieren und zu justieren. Dabei kann die Justage entlang der beiden hier gezeigten Achsen 501 und 502 in zweidimensionaler Art erfolgen.

Weiterhin ist es möglich, dass das Verbindungselement 106 in seiner äußeren Form derart an die Zwischenplatte 1500 (siehe Fig. 17 bis 20) und/oder derart an das Verbindungselement 113 (siehe Fig. 9 bis 13) angepasst ist, dass sich ein Formschluss ergibt. Aber auch ein teilweiser Formschluss zwischen diesen genannten Elementen ist möglich.

Fig. 8 zeigt die Führungsplatte 112 mit den beiden Öffnungen 114 und 115. Dabei kann an der Öffnung 114 beispielsweise ein Rollenelement 108, was auch in diesem und in jedem anderen Ausführungsbeispiel der Erfindung als Führungsrolle bezeichnet werden kann, befestigt und mit dem Verbindungselement in Verbindung gebracht werden. Die Öffnung 115 ist, wie beispielsweise in Fig. 4 gezeigt, dazu geeignet, die Kettenführung mit einer zusätzlichen Fixierung an der Kettenstrebe 100 fixieren.

Die Fig. 9, 10 und 11 zeigen jeweils verschiedene Ansichten des Verbindungselements 113, welches zur Anbringung eines Rollenelements 108 (hier nicht gezeigt) insbesondere an der Aufnahmevorrichtung der Kettenstrebe ausgeführt ist. Dabei ist in Fig. 10 die Öffnung 800 gezeigt, mittels welcher das Rollenelement an das Verbindungselement 113 in Kombination mit beispielsweise einer Schraube fixiert werden kann. Weiterhin ist in Fig. 11 deutlich zu sehen, dass die gezeigte Oberfläche 900 des Verbindungselements 113 eine reliefartige Oberfläche ist. Dabei ist ein vertiefter Bereich 903 zu sehen, der abgesenkt ist gegenüber den äußeren Randbereichen 904 und 905. Dabei sind die Übergangskanten 901 und 902 rechtwinklig ausgeführt, können aber auch nicht rechtwinklig ausgeführt sein. Weiterhin ist eine Öffnung 404 gezeigt.

In Kombination mit der vorher beschriebenen Fig. 7 wird nun deutlich, dass das Verbindungselement 113 beispielsweise auf das in Fig. 7 gezeigte Führungselement 106 aufgeschoben werden kann. Dabei können die Dimensionierungen des Führungselements 106 und die Oberfläche 900 derart aneinander angepasst sein, dass sich ein Formschluss ergibt. Es ist aber auch möglich, dass die Breite 906 des vertieften Bereichs 903 und die Länge 907 des vertieften Bereichs 903 derart gegenüber den Abmessungen des (nicht gezeigten) Führungselements 106 angepasst sind, dass sich eine zweidimensionale Justage des Führungselements und damit des daran angebrachten Rollenelements ermöglicht wird. Mit anderen Worten die beiden Elemente haben Spiel, was eine zweidimensionale Justierung entlang der in Fig. 7 gezeigten Achsen 501 und 502 ermöglicht. Es sei weiterhin darauf hingewiesen, dass zusätzlich zu der eben beschriebenen Kettenführung, die das Verbindungselement 113 aufweist, eine Zwischenplatte 1500 zur Justage verwendet werden kann. Dabei kann sich beispielsweise ein Formschluss zwischen der Zwischenplatte 1500 und der Oberfläche 900 ergeben. Aber auch eine nicht formschlüssige Ausführung ist möglich, um eine analoge zweidimensionale Ausrichtung der Zwischenplatte innerhalb des vertieften Bereichs 903 zu ermöglichen. Die gezeigte Öffnung 404 der Fig. 11 kann dabei zur Deckung gebracht werden mit der Öffnung 400 der Fig. 7 und/oder mit der Öffnung 1502 der Fig. 17, um anschließend mittels eines Befestigungsmittels eine Fixierung der gesamten Kettenführung zu realisieren.

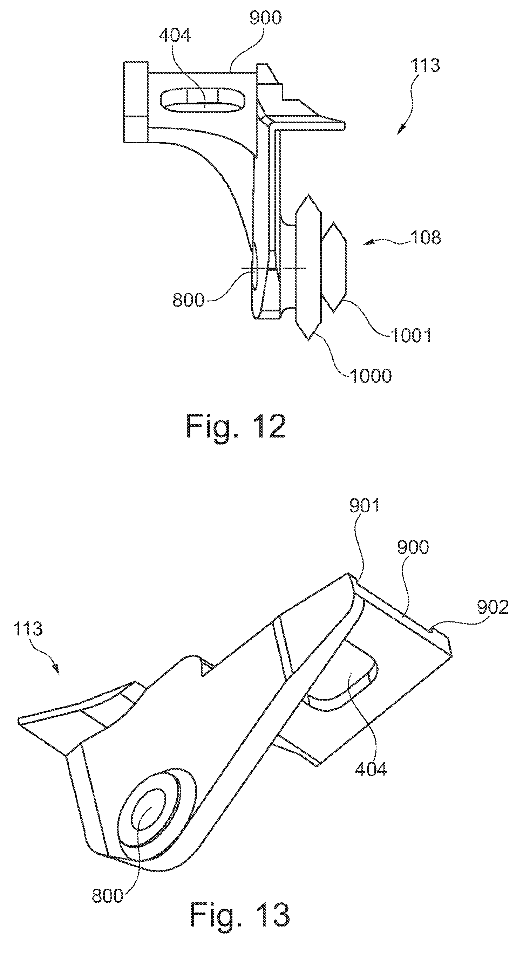

Fig. 12 und 13 zeigen weitere Ansichten des Verbindungselements 113. Dabei ist in Fig. 12 in einer Rückansicht des Verbindungselements 113 die Öffnung 404 gezeigt, welche sich innerhalb der abgesenkten Oberfläche 900 befindet. Weiterhin ist die Öffnung 800 des Verbindungselements 113 gezeigt, welches eine Fixierung des Rollenelements 118 an dem Verbindungselement ermöglicht. Dabei ist das Verbindungselement Teil eines weiteren Ausführungsbeispiels der Erfindung. Beispielhaft ist gezeigt, dass das Rollenelement auch zweistückig ausgeführt sein kann, wobei ein erstes Unterrollenelement 1000 und ein zweites Rollenelement 1001 gezeigt ist. Dabei weisen die beiden jeweils einstückig ausgeführten Elemente 1000 und 1001 unterschiedliche Durchmesser auf.

Fig. 13 zeigt eine Perspektive auf das Verbindungselement 113 aus einem unteren Betrachtungswinkel. Es ist die Öffnung 800 zur Anbringung eines Rollenelements gezeigt und die Öffnung 404, die bei der Justage des Verbindungselementes an der Kettenstrebe (nicht gezeigt) mit der Öffnung, die beispielsweise als Gewinde ausgeführt sein kann 400, zur Deckung gebracht wird. Es ist wiederum deutlich zu sehen, dass der abgesenkte Bereich 900 durch zwei rechtwinklig verlaufende Kanten 901 und 902 begrenzt wird. Dies stellt einen Spielraum zur Justage für die Anbringung des Verbindungselements 113 auf dem Führungselement 116 bereit.

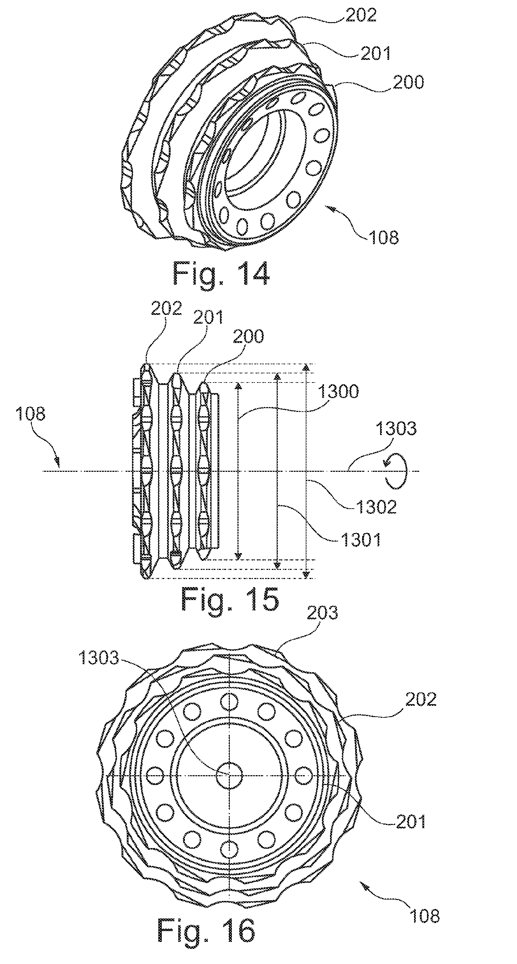

Fig. 14 zeigt eine schräge Ansicht des Rollenelements 108, bei dem deutlich zu erkennen ist, dass das Rollenelement einen ersten Bereich 200, einen zweiten Bereich 201 und einen dritten Bereich 202 aufweist, wobei die Bereiche jeweils unterschiedliche Durchmesser aufweisen. Dabei kann dieses Ausführungsbeispiel des Rollenelements einstückig oder auch mehrstückig ausgeführt sein.

Wie in Fig. 14 zu sehen ist, kann das Rollenelement drei unterschiedliche Durchmesser (1300, 1301, 1302) aufweisen, wobei jeweils ein Durchmesser des Rollenelements mit je einer Position der Kette auf einem von drei Kettenblättern korrespondiert.

Fig. 15 zeigt eine Seitenansicht des Rollenelements 108 mit den drei unterschiedlichen Bereichen 200, 201 und 201, wobei der erste Bereich 200 einen ersten Durchmesser 1300, der zweite Bereich 201 einen zweiten Durchmesser 1301 und der dritte Bereich 202 einen dritten Durchmesser 1302 aufweist. Die drei Durchmesser sind dabei von unterschiedlicher Größe. Dabei sind die drei Bereiche konzentrisch um eine Drehachse 1303 des Rollenelements angeordnet.

Fig. 16 zeigt eine Frontansicht des Rollenelements 103 mit den drei verschiedenen Bereichen 201 bis 203. Weiterhin ist die Drehachse 1303 gezeigt.

Fig. 17 zeigt eine Zwischenplatte 1500 mit einem ersten erhöhten Bereich 1501, der mittig zentriert eine Öffnung 1502 aufweist. Seitlich dazu befinden sich zwei rechtwinklig abgesetzte Bereiche 1503 und 1504. Dies ist deutlich in der Querschnittsdarstellung der Fig. 18 zu sehen, in welcher der ebene Bereich 1501 erhöht gegenüber den ebenen Bereichen 1503 und 1504 gezeigt ist. Weiterhin weist die Zwischenplatte 1500 eine ebene Rückwand 1505 auf.

Fig. 19 zeigt ein weiteres Ausführungsbeispiel einer Zwischenplatte 1700 im Querschnitt. Dabei weist diese Zwischenplatte eine vordere Oberfläche (1704) auf, die U-förmig gestaltet ist. Neben einem vertieften Bereich 1701 weist sie zwei rechtwinklig dazu erhöhte Bereiche 1702 und 1703. Diese Zwischenplatte ist in Fig. 20 in einer perspektivischen Darstellung gezeigt, in der man weiterhin eine Öffnung 1801 erkennen kann. Weiterhin wird in Fig. 20 deutlich, dass die Oberfläche 1704 einen Führungskanal 1803 bereitstellt, welcher beispielsweise mit dem zuvor gezeigten Führungselement 106 in Fig. 7, welches durch eine Kettenstrebe und durch die Aufnahmevorrichtung 101 bereitgestellt wird, kombiniert werden kann. Dies kann zu einer verbesserten Justage der Kettenführung führen.

Weiterhin ist gezeigt, dass auf der Rückseite 1800 ein rechtwinkliger erhöhter Bereich 1802 angeordnet ist. Dieser erhöhte Bereich 1802 auf der Rückseite der Zwischenplatte 1700 kann beispielsweise in den zuvor gezeigten Führungskanal des Verbindungselements 113 (nicht gezeigt) eingeführt werden, welcher Führungskanal beispielsweise in Fig. 11 durch den abgesenkten Bereich 903 bereitgestellt wird. Mittels dieser Kombination der Zwischenplatte 1700, dem Verbindungselement 113 und der Aufnahmevorrichtung 101 mit dem Führungselement 106 (Fig. 7) kann erreicht werden, dass eine Feinjustage der Kettenführung und eine zweidimensionale und winkelgerechte Orientierung der Kettenführung vor einer Fixierung erfolgen kann.

Fig. 21 zeigt ein Fahrrad 1907 mit einem Hinterbau 1900, welcher unter anderem eine Kettenstrebe 100 aufweist. Weiterhin ist das Tretlagergehäuse 1901 und der Bereich 1902 eines hinteren Ausfallendes gezeigt. Es ist deutlich zu sehen, dass sich die Kettenstrebe 100 zwischen diesem Bereich 1902 und dem Tretlagergehäuse 1902 erstreckt. Dabei sei explizit darauf hingewiesen, dass sich der Bereich in dem sich gemäß der Erfindung die Aufnahmevorrichtung befindet in Fig. 21 rechts von dem Ende der Kettenstrebe 1909 befindet. Weiterhin weist die Kettenstrebe eine Aufnahmevorrichtung 101 auf, welche sich in dem vorderen Tretlagergehäuse nahen Bereich befindet. Dabei ist deutlich zu sehen, dass der Abstand 1903 zwischen der Aufnahmevorrichtung 101 und dem Zentrum des Tretlagers deutlich geringer ist als der Abstand 1904 zwischen dem Hinterrad 1905 und dem Zentrum des Tretlagers. Mit anderen Worten ist in diesem Ausführungsbeispiel der Erfindung die Kettenführung in einem Bereich der Kettenstrebe angebracht, in welchem die Kettenführung (hier nicht gezeigt) durch die Kettenstrebe und das hier beispielhaft gezeigte Kettenblatt 1908 vor mechanischen Einflüssen geschützt ist. Dies vermag einen Sicherheitsgewinn für den Benutzer zu bedeuten. Weiterhin ist aufgrund der sehr nahen Positionierung der Kettenführung an dem Kettenblatt 1908 gewährleistet, dass auch während eines Rückwärtstretens des Benutzers die Kette in der gewünschten Position mittels der Kettenführung gehalten wird. Eine unerwünschte laterale Bewegung und ein dadurch verursachter unerwünschter Schaltvorgang der Kette kann somit vermieden werden. Dies kann einen Sicherheitsgewinn bedeuten, da zum Beispiel Fehltritte verhindert werden können.

Weiterhin ist deutlich zu sehen, dass bei einer Bewegung, die von dem Hinterbau 1900 durchgeführt wird und die durch die Pfeile 117 dargestellt wird, die Kettenführung, welche an der Kettenstrebe angeordnet ist, diese Bewegung ebenso wie die Kettenstrebe durchführt. Somit ist das Kettenführungssystem, welches die Kettenstrebe 100 mit der Aufnahmevorrichtung 101 und der hier nicht gezeigten Kettenführung 103 den Abstand von einem Rollenelement der Kettenführung zur Kettenstrebe nahezu konstant halten kann und ein permanenter Kontakt von der Kette und dem Rollenelement unabhängig von der Dynamik des Hinterbaus erreicht werden kann.

Fig. 22 zeigt ein weiteres Kettenführungssystem 107 gemäß einem weiteren Ausführungsbeispiel der Erfindung. Dabei ist eine Kettenstrebe 100 gezeigt, welche in einem mittleren Bereich 1906 der Kettenstrebe angeordnet ist. Dabei kann in diesem Ausführungsbeispiel die Aufnahmevorrichtung beispielsweise als Öffnung 101 ausgeführt sein. Dabei umfasst die Kettenführung 103 in diesem Ausführungsbeispiel ein Gelenk 2000, wobei die Führung der Kette bei einer Bewegung der Kette die durch eine Kettenschaltung hervorgerufen wird, durch eine Bewegung der Kettenführung 103 um das Gelenk 2000 herum erfolgt.

Dabei ist das Gelenk als Drehachse 2002 ausgeführt und die Kettenführung weist einen schwenkbaren Arm 2003 auf, der um diese Drehachse herum schwenkbar ist. Weiterhin weist die Kettenführung in diesem Ausführungsbeispiel ein Rollenelement 108 auf, welches an dem Schwenkarm fixiert ist. Dabei kann auch dieses Rollenelement die vorgenannten Eigenschaften eines Rollenelements aufweisen.

Fig. 23 zeigt das Kettenführungssystem 107 aus Fig. 22 aus einer Vogelperspektive, wobei in dieser Darstellung deutlich zu sehen ist, dass eine laterale Bewegung der Kette in y-Richtung 116 erfolgt. Der schwenkbare Arm 2003 dreht sich somit um die Drehachse 2002, welche in einem mechanischen Gehäuse 2001 zur Unterbringung der Drehachse auf die Kettenstrebe 100 aufgebracht ist. Dieses Gehäuse kann beispielsweise mittels der Aufnahmevorrichtung 101, welches ein Gewinde aufweisen kann, mit der Kettenstrebe verschraubt werden. Aber auch andere Anbringungsarten sind möglich. Aufgrund dieser beweglich gelagerten Anbringung des schwenkbaren Arms 2003 in dem mittleren Bereich der Kettenstrebe 1906 ist es dem Arm möglich, bei einer Bewegung der Kette in y-Richtung, die beispielsweise durch eine Kettenschaltung hervorgerufen wird, dieser Bewegung nachzufolgen und eine gewünschte Führung der Kette zu erreichen. Dabei kann beispielsweise in diesem und in jedem anderen Ausführungsbeispiel die Kettenführung mittels der Kettenrolle derart eingestellt werden, dass eine zusätzliche Spannung auf der Kette erzeugt wird, um ein Herunterfallen der Kette von den Kettenblättern oder dem Ritzel zu verhindern.

## Patentansprüche

1. Kettenführung zur Führung einer Fahrradkette und zur Anbringung an einer Kettenstrebe an einem Fahrradhinterbau, die Kettenführung aufweisend eine Kettenführungsvorrichtung, die derart ausgebildet ist, dass eine Kette bei Bewegungen der Kette, die durch eine Kettenschaltung hervorgerufen wird, durch die Kettenführungsvorrichtung geführt wird; **dadurch gekennzeichnet, dass**
die Kettenführungsvorrichtung ein Gleitelement (612) aufweist, das derart ausgebildet ist, dass die Kette bei Bewegungen der Kette, die durch die Kettenschaltung hervorgerufen wird, durch das Gleitelement innerhalb eines gewünschten Positionsbereichs gehalten wird;
wobei das Gleitelement eine Fläche aufweist, die derart geneigt verläuft, dass die Neigungsrichtung an die unterschiedlichen Durchmesser von vorderen Kettenblättern angepasst ist, so dass eine Veränderung eines Umschlingungswinkels (109) der Kette um das Gleitelement bei Änderungen der Position der Kette auf den Kettenblättern minimiert ist.

2. Kettenführung zur Führung einer Fahrradkette und zur Anbringung an einer Kettenstrebe an einem Fahrradhinterbau, die Kettenführung aufweisend eine Kettenführungsvorrichtung, die derart ausgebildet ist, dass eine Kette bei Bewegungen der Kette, die durch eine Kettenschaltung hervorgerufen wird, durch die Kettenführungsvorrichtung geführt wird; **dadurch gekennzeichnet, dass**
die Kettenführungsvorrichtung ein Rollenelement (108) aufweist, das zumindest einen ersten Bereich (200) mit einem ersten diskreten Durchmesser (1300) und einen zweiten Bereich (201) mit einem zweiten diskreten Durchmesser (1301) aufweist; wobei der erste und der zweite Durchmesser unterschiedlich sind;
wobei der erste Bereich zur Führung der Kette in einer ersten Position der Kette auf Kettenblättern des Fahrrads ausgeführt ist;
wobei der zweite Bereich zur Führung der Kette in einer zweiten Position der Kette auf den Kettenblättern des Fahrrads ausgeführt ist; und
wobei ein Wechsel der Kette von der ersten in die zweite Position durch eine Kettenschaltung verursacht wird;
wobei die unterschiedlichen Durchmesser des Rollenelements derart an Durchmesser der Kettenblätter des Fahrrades angepasst sind, dass eine Veränderung eines Umschlingungswinkels (109) der Kette um das Rollenelement bei Änderungen der Position der Kette auf den Kettenblättern minimiert ist.

3. Kettenführung gemäß Anspruch 1, wobei das Gleitelement eine Gleitfläche aufweist, die mit Absätzen oder Stufen ausgebildet ist.

4. Kettenführungssystem (107) mit
- einer Kettenstrebe(100) an einem Fahrradhinterbau (1900); und
- einer Kettenführung (103) zur Führung einer Kette (104) gemäß einem der Ansprüche 1 bis 3;
wobei die Kettenstrebe zumindest eine Aufnahmevorrichtung (101) aufweist; wobei sich die Kettenstrebe zwischen einem Tretlagergehäuse (1901) des Fahrrades und einem Bereich (1902) eines hinteren Ausfallendes des Fahrrades erstreckt;
wobei die Aufnahmevorrichtung Teil der Kettenstrebe ist; und
wobei die Aufnahmevorrichtung zur Befestigung einer Kettenführung (103) an der Kettenstrebe ausgeführt ist.

5. Kettenführungssystem gemäß Anspruch 4, wobei die Aufnahmevorrichtung an einer Unterseite (105) der Kettenstrebe angeordnet ist.

6. Kettenführungssystem gemäß Anspruch 4 oder 5, wobei ein erster Abstand (1903) zwischen der Aufnahmevorrichtung und dem Tretlagergehäuse geringer ist als ein zweiter Abstand (1904) zwischen einem Hinterrad (1905) und dem Tretlagergehäuse.

7. Kettenführungssystem gemäß einem der Ansprüche 4 bis 6,
wobei die Aufnahmevorrichtung in einem mittleren Bereich (1906) der Kettenstrebe zwischen dem Tretlagergehäuse des Fahrrads und dem Bereich eines hinteren Ausfallendes angeordnet ist.

8. Kettenführungssystem gemäß einem der Ansprüche 4 bis 7, wobei die Kettenführungsvorrichtung ein Rollenelement (108) aufweist, das derart ausgeführt ist, dass die Kette bei Bewegungen der Kette, die durch eine Kettenschaltung hervorgerufen wird, durch das Rollenelement in einer gewünschten Position gehalten wird.

9. Kettenführungssystem gemäß einem der Ansprüche 4 bis 8,
wobei die Kettenführung (103) ein Gelenk (2000) aufweist; und
wobei die Führung der Kette bei einer Bewegung der Kette, die durch eine Kettenschaltung hervorgerufen wird, durch eine Bewegung der Kettenführung um das Gelenk herum erfolgt.

10. Kettenführungssystem gemäß Anspruch 9,
wobei das Gelenk eine Drehachse (2002) ist;
wobei die Kettenführung einen schwenkbaren Arm (2003) aufweist;
wobei der Arm ein Rollelement aufweist; und
wobei die Führung der Kette bei einer Bewegung der Kette, die durch eine Kettenschaltung hervorgerufen wird, durch eine Schwenkbewegung des Arms erfolgt.

11. Fahrrad (1907) mit einem Hinterbau (1900), an welchem ein Kettenführungssystem gemäß einem der Ansprüche 4 bis 10 angeordnet ist.

12. Fahrrad gemäß Anspruch 11, wobei sich die Kettenstrebe zwischen einem Tretlagergehäuse (1901) des Fahrrades und einem Bereich (1902) eines hinteren Ausfallendes des Fahrrads erstreckt.

## Claims

1. A chain guide for guiding a bicycle chain and for attaching to a chain stay on a rear frame of a bicycle, the chain guide comprising a chain guide device configured such that a chain, during movements of the chain caused by a derailleur, is guided by the chain guide device; **characterised in that**
the chain guide device comprises a gliding element (612) which is configured such that the chain, during movements of the chain caused by the derailleur, is held within a desired position range by the gliding element;
wherein the gliding element comprises a surface which extends at an incline such that the direction of incline is adapted to the different diameters of forward chain rings, so that a change in a wrap angle (109) of the chain about the gliding element is minimised during changes in the position of the chain on the chain rings.

2. The chain guide for guiding a bicycle chain and for attaching a chain stay to a bicycle rear frame, the chain guide comprising a chain guide device which is configured such that a chain, during movements of the chain caused by a derailleur, is guided by the chain guide device; **characterised in that**
the chain guide device comprises a roller element (108) having at least one first range (200) with a first discrete diameter (1300) and a second range (201) with a second discrete diameter (1301);
wherein the first and the second diameters are different from each other;
wherein the first range is configured for guiding the chain in a first position of the chain on the chain rings of the bicycle;
wherein the second range is configured for guiding the chain in a second position of the chain on the chain rings of the bicycle; and
wherein a change the chain from the first into the second position is caused by a derailleur;
wherein the different diameters of the roller element are adapted to diameters of the chain rings of the bicycle such that a change in the wrap angle (109) of the chain about the roller element is minimised during changes in the position of the chain on the chain rings.

3. The chain guide according to claim 1, wherein the gliding element comprises a gliding surface, which comprises recesses or steps.

4. A chain guide system (107) with
- a chain stay (100) on a bicycle rear frame (1900); and
- a chain guide (103) for guiding a chain (104) according to one of claims 1 to 3;
wherein the chain stay comprises at least one receiving device (101);
wherein the chain stay extends between a bottom bracket housing (1901) of the bicycle and an area (1902) of a rear dropout of the bicycle;
wherein the receiving device is part of the chain stay; and
wherein the receiving device is designed for fastening a chain guide (103) to the chain stay.

5. The chain guide system according to claim 4, wherein the receiving device is arranged on an underside (105) of the chain stay.

6. The chain guide system according to claim 4 or 5, wherein a first distance (1903) between the receiving device and the bottom bracket housing is less than a second distance (1904) between a rear wheel (1905) and the bottom bracket housing.

7. The chain guide system according to one of claims 4 to 6, wherein the receiving device is arranged in a centre area (1906) of the chain stay between the bottom bracket housing of the bicycle and the area of a rear dropout.

8. The chain guide system according to one of claims 4 to 7, wherein the chain guide device comprises a roller element (108), which is configured such that the chain, during movements of the chain caused by a derailleur, is held in a desired position by the roller element.

9. The chain guide system according to one of claims 4 to 8, wherein the chain guide (103) comprises a joint (2000); and
wherein, during a movement of the chain caused by a derailleur, the guiding of the chain is effected by a movement of the chain guide about the joint.

10. The chain guide system according to claim 9,
wherein the joint is a rotary axis (2002);
wherein the chain guide comprises a pivotable arm (2003) ;
wherein the arm comprises a roller element; and wherein during a movement of the chain caused by a derailleur, the guiding of the chain is effected by a pivotal movement of the arm.

11. A bicycle (1907) with a rear frame (1900) which has a chain guide system according to one of claims 4 to 10 arranged on it.

12. The bicycle according to claim 11, wherein the chain stay extends between a bottom bracket housing (1901) of the bicycle and an area (1902) of a rear dropout of the bicycle.

## Revendications

1. Guidage de chaîne pour guider une chaîne de bicyclette et pour montage sur un montant de chaîne sur un cadre arrière de bicyclette, le guidage de chaîne comprenant un dispositif de guidage de chaîne qui est constitué de telle manière qu'une chaîne est guidée par le dispositif de guidage de chaîne lors des mouvements de la chaîne qui sont causés par un changement de vitesses, **caractérisé en ce que** le dispositif de guidage de chaîne comporte un élément de glissement (612) qui est constitué de telle manière que la chaîne est maintenue par l'élément de glissement à l'intérieur d'une plage de positions souhaitée, lors des mouvements de la chaîne qui sont causés par le changement de vitesses, l'élément de glissement comportant une surface qui a un profil incliné de telle manière que le sens d'inclinaison est adapté aux diamètres différents des plateaux de pédalier de manière qu'une modification d'un angle d'enroulement (109) de la chaîne autour de l'élément de glissement est minimisée lors des changements de position de la chaîne sur les plateaux de pédalier.

2. Guidage de chaîne pour guider une chaîne de bicyclette et pour montage sur un montant de chaîne sur un cadre arrière de bicyclette, le guidage de chaîne comprenant un dispositif de guidage de chaîne, qui est constitué de telle manière qu'une chaîne est guidée par le dispositif de guidage de chaîne lors des mouvements de la chaîne qui sont causés par un changement de vitesses, **caractérisé en ce que** le dispositif de guidage de chaîne comporte un élément à galets (108) qui comporte au moins une première zone (200) avec un premier diamètre discret (1300) et une deuxième zone (201) avec un deuxième diamètre discret (1301),
le premier et le deuxième diamètre étant différents, la première zone étant exécutée pour guider la chaîne dans une première position de la chaîne sur les plateaux de pédalier de la bicyclette,
la deuxième zone étant exécutée pour guider la chaîne dans une deuxième position de la chaîne sur les plateaux de pédalier de la bicyclette, et
un changement de la chaîne de la première à la deuxième position étant causé par un changement de vitesses,
les diamètres différents de l'élément à galets étant adaptés de telle manière au diamètre des plateaux de pédalier de la bicyclette qu'une modification d'un angle d'enroulement (109) de la chaîne autour de l'élément à galets est minimisée lors des modifications de position de la chaîne sur les plateaux de pédalier.

3. Guidage de chaîne selon la revendication 1, l'élément de glissement comportant une surface de glissement qui est constituée avec des paliers ou des gradins.

4. Système de guidage de chaîne (107) avec
- un montant de chaîne (100) sur un cadre arrière de bicyclette (1900), et
- un guidage de chaîne (103) destiné à guider une chaîne (104) selon l'une quelconque des revendications 1 à 3,
le montant de chaîne comportant au moins un dispositif de réception (101),
le montant de chaîne s'étendant entre un carter de pédalier (1901) de la bicyclette et une zone (1902) d'une patte de cadre arrière de la bicyclette,
le dispositif de réception faisant partie du montant de chaîne, et
le dispositif de réception étant exécuté pour la fixation d'un guidage de chaîne (103) sur le montant de chaîne.

5. Système de guidage de chaîne selon la revendication 4, le dispositif de réception étant disposé sur un côté inférieur (105) du montant de chaîne.

6. Système de guidage de chaîne selon la revendication 4 ou 5, une première distance (1903) entre le dispositif de réception et le carter de pédalier étant plus faible qu'une deuxième distance (1904) entre une roue arrière (1905) et le carter de pédalier.

7. Système de guidage de chaîne selon l'une quelconque des revendications 4 à 6, le dispositif de réception étant disposé dans une zone centrale (1906) du montant de chaîne entre le carter de pédalier de la bicyclette et la zone d'une patte de cadre arrière.

8. Système de guidage de chaîne selon l'une quelconque des revendications 4 à 7, le dispositif de guidage de chaîne comportant un élément à galets (108) qui est exécuté de telle manière que la chaîne est maintenue par l'élément à galets dans une position souhaitée lors des mouvements de la chaîne qui sont causés par un changement de vitesses.

9. Système de guidage de chaîne selon l'une quelconque des revendications 4 à 8, le guidage de chaîne (103) comportant une articulation (2000), et
le guidage de la chaîne lors d'un mouvement de la chaîne, causé par un changement de vitesses, ayant lieu par un mouvement du guidage de chaîne autour de l'articulation.

10. Système de guidage de chaîne selon la revendication 9, l'articulation étant un axe de rotation (2002),
le guidage de chaîne comportant un bras pouvant pivoter (2003),
le bras comportant un élément à galets, et
le guidage de la chaîne lors d'un mouvement de la chaîne, causé par un changement de vitesses, ayant lieu par un mouvement de pivotement du bras.

11. Bicyclette (1907) avec un cadre arrière (1900) sur lequel est disposé un système de guidage de chaîne selon l'une quelconque des revendications 4 à 10.

12. Bicyclette selon la revendication 11, le montant de chaîne s'étendant entre un carter de pédalier (1901) de la bicyclette et une zone (1902) d'une patte de cadre arrière de la bicyclette.
